(19) Europäisches Patentamt
European Patent Office
Office européen des brevets

(11) **EP 4 772 474 A1**

(12) **EUROPEAN PATENT APPLICATION**
published in accordance with Art. 153(4) EPC

(43) Date of publication:
**08.07.2026 Bulletin 2026/28**

(21) Application number: **25849699.1**

(22) Date of filing: **14.08.2025**

(51) International Patent Classification (IPC):
**C01C 3/12** (2006.01)

(52) Cooperative Patent Classification (CPC):
**C01C 3/12; Y02C 20/40**

(86) International application number:
**PCT/CN2025/114612**

(87) International publication number:
**WO 2026/045940 (05.03.2026 Gazette 2026/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.08.2024 CN 202411193833**
　　　　　　**28.08.2024 CN 202411193798**
　　　　　　**28.08.2024 CN 202411193703**

(71) Applicant: **Zhejiang University**
**Hangzhou, Zhejiang 310058 (CN)**

(72) Inventor: **The designation of the inventor has not yet been filed**

(74) Representative: **Chung, Hoi Kan**
**Mandarin IP Limited**
**7 Cherry Trees**
**Great Shelford**
**Cambridge CB22 5XA (GB)**

(54) **POROUS METAL-CYANIDE-BASED FRAMEWORK MATERIAL HAVING CATION-GATED EFFECT, PREPARATION METHOD THEREFOR, AND USE THEREOF IN CARBON-DIOXIDE CAPTURE**

(57) Provided is a porous metal cyanide-based framework material (MCFs) with cation gating effect, along with its preparation method and application in carbon dioxide capture. The general structural formula of the framework material is $M_x[M'(CN)_6]_y \cdot A_z \cdot nH_2O$, where $0 \leq n \leq 10$. When $n \geq 1$, the crystal structure belongs to the *R3c* space group. When $0 \leq n < 1$, the structure transforms to the P2/c space group. The framework material has a cage structure, and each cage has six hexagonal windows and six quadrilateral windows. The monovalent cations at the hexagonal windows exhibit a gating effect, which can selectively allow carbon dioxide molecules to pass through. The framework material has the highest $CO_2$ adsorption capacity and selectivity in carbon dioxide capture, especially in the application of carbon dioxide adsorption under low pressure ($\leq$ 0.15 bar) and high humidity environment ($\geq$ 40% RH).

FIG. 5

EP 4 772 474 A1

**Description**

**TECHNICAL FILED**

The invention belongs to the field of material technology, and specifically relates to a metal cyanide-based material, more particularly to a porous metal cyanide-based framework material with cation gating effect, its preparation method, and application in carbon dioxide capture.

**BACKGROUND**

The annual increase in atmospheric carbon dioxide ($CO_2$) concentration has caused environmental problems such as the greenhouse effect. Carbon Capture and Storage (CCS) technology is a key means to reduce carbon dioxide emissions into the atmosphere, among which $CO_2$ capture technology, as the upstream foundation, is crucial. Among numerous carbon dioxide emission sources, $CO_2$ emitted from flue gas generated after fossil fuel combustion accounts for 65% of the total emissions. Therefore, efficient capture of $CO_2$ from flue gas is of great significance. In addition to flue gas $CO_2$ capture, there is an urgent need to develop high-performance carbon capture materials for biogas $CO_2$ capture and confined space $CO_2$ capture.

The $CO_2$ concentration in these scenarios is relatively low, belonging to the field of low-pressure gas adsorption (Kolle, J. M., Fayaz, M., Sayari, A. Chem. Rev. 121, 7280-7345 (2021)). For example, the $CO_2$ concentration in flue gas is 3%--15% (commonly 15%), the $N_2$ concentration is 65%--85% (commonly 85%), and it also contains a small amount of water vapor, trace amounts of $SO_2$, NO and other impurities. Specifically, the $CO_2$ concentration in flue gas generated after coal combustion is 11%, the $N_2$ concentration is 76%, the $H_2O$ concentration is 6%, and the concentrations of $SO_2$ and NO are 300--500 ppm (R. Zevenhoven, et al. In Control of Pollutants in Flue Gases and Fuel Gases; Helsinki University of Technology: Helsinki (2021)). This low-pressure environment ($\leq 15$ bar) makes it difficult for adsorbents to obtain high low-pressure adsorption capacity and selectivity. On the other hand, water vapor has a negative impact on most adsorbents in high-humidity environments ($\geq 40\%$ RH) (A. Rajendran, et al. Adv. Mater. 2301730 (2023)). The competitive adsorption between $H_2O$ and $CO_2$ makes $H_2O$ occupy a large number of $CO_2$ adsorption sites, leading to a significant attenuation of $CO_2$ adsorption capacity and selectivity. Therefore, it is very difficult to selectively capture $CO_2$ gas with high adsorption capacity from low-pressure and high-humidity flue gas.

At present, the industrial method for capturing carbon dioxide is the liquid amine absorption method, which is the most mature, with high $CO_2$ adsorption capacity and selectivity. However, it has shortcomings such as high regeneration energy consumption, slow adsorption kinetics, easy corrosion of equipment, and environmental unfriendliness, which are difficult to further improve (M. J. Lashaki, et al. Chem. Soc. Rev. 48, 3320-3405 (2019); R. L. Siegelman, et al. Nat. Mater. 20, 1060-1072 (2021)). In contrast, the physical adsorption method based on porous materials has become an ideal alternative technology due to its advantages of low regeneration energy consumption, simple operation, and environmental friendliness.

The design and selection of adsorbent materials are the core of carbon dioxide physical adsorption technology. An ideal adsorbent material should have comprehensive and excellent overall performance, including adsorption performance ($CO_2$ adsorption capacity, selectivity, and kinetics), desorption performance (adsorbent regeneration energy consumption), moisture resistance ($CO_2$ adsorption capacity under water vapor conditions), and engineering performance (stability, large-scale production, cost, environmental protection, etc.), so as to meet the requirements of practical applications. In the past two decades, although research on $CO_2$ capture materials has been extensively carried out, there is still a lack of high-performance materials that can be truly used for industrial $CO_2$ capture.

Traditional zeolite molecular sieve materials, such as 13X and 5A, usually have one-dimensional channel-shaped pores, and the pore structure is difficult to design precisely, resulting in difficulty in achieving high $CO_2$ adsorption capacity and selectivity. At the same time, zeolite materials have extremely poor moisture resistance, and the $CO_2$ adsorption capacity will be significantly attenuated in the presence of water vapor (J. Merel, et al. Chem. Res. 47, 209-215 (2008)).

Porous framework materials, such as metal-organic frameworks (MOFs) and covalent organic frameworks (COFs), are more likely to achieve high $CO_2$ adsorption capacity and selectivity due to their high porosity, precise structural design, and easy functionalization. At present, based on the pore size regulation and functionalization strategies of porous framework materials, many related materials have been developed (such as Mg-MOF-74, UTSA-16, SIFSIX-2-Cu-i, and ALF; S. R. Caskey, et al. J. Am. Chem. Soc. 130, 10870-10871 (2008); S. Xiang, et al. Nat. Commun. 3, 954 (2012); P. Nugent, et al. Nature 495, 80-84 (2013); H. A. Evans, et al. Sci. Adv. 8, eade1473 (2022)). However, they still have problems such as insufficient low-pressure (0.15 bar, $CO_2$ concentration in flue gas) $CO_2$ adsorption capacity, low adsorption selectivity, and performance attenuation caused by water vapor competitive adsorption (Z. Zhang, et al. Energy Environ. Sci. 7, 2868-2899 (2014); A. Rajendran, et al. Adv. Mater. 35, 2301730 (2023)). More importantly, most porous framework materials have poor engineering performance, usually having problems such as poor stability, high cost, toxic solvents, or complex synthesis, making it difficult to realize industrial applications (D. Chakraborty, et al. Adv. Funct. Mater. 33, 2309089 (2023)).

Up to now, although a MOF material CALF-20 for flue gas $CO_2$ capture has been reported, which shows relatively excellent overall performance, and the $CO_2$ adsorption capacity is not affected under 40% RH humidity conditions (J.-B. Lin, et al. Science 374, 1464-1469 (2021)), and has cooperated with BASF and Svante to promote its commercial application (relevant patent: CA2904546A1), CALF-20 still has defects such as insufficient low-pressure $CO_2$ adsorption capacity (2.7 mmol $g^{-1}$ under 298 K and 0.15 bar conditions), severe attenuation of $CO_2$ adsorption performance in high-humidity environments ($\geq$ 40% RH), and poor environmental friendliness (toxic methanol solvent is used in synthesis), which seriously limit its $CO_2$ capture efficiency and application.

In summary, in the field of flue gas $CO_2$ capture, existing framework materials still cannot overcome the trade-off effect between $CO_2$ adsorption capacity and selectivity under low-pressure ($\leq$ 0.15 bar) and high-humidity environments ($\geq$ 40% RH), as well as the problem of poor moisture resistance of framework materials. This is manifested in the severe attenuation of carbon dioxide adsorption performance of framework materials in high-humidity environments, which cannot be used for efficient and low-energy consumption capture of $CO_2$ in industry.

## SUMMAYR

Aiming at the deficiencies of the prior art, the invention provides a metal cyanide-based framework material (MCFs) with cation gating effect, its preparation method, and application in carbon dioxide capture. The framework material of the invention contains free monovalent cations inside, has a unique crystal structure and unit cell parameters, and multiple characteristics play a synergistic role. The framework material has a cation gating effect, showing a new type of $CO_2$ adsorption and separation mechanism, and has excellent moisture resistance. It exhibits the highest $CO_2$ adsorption capacity and selectivity in carbon dioxide capture applications, especially carbon dioxide adsorption under low pressure ($\leq$ 0.15 bar) and high humidity environment ($\geq$ 40% RH). Under the conditions of 296 K, 0.15 bar, and 40-80% RH, it can achieve a carbon dioxide adsorption capacity of at least 3.5 mmol $g^{-1}$ (140 $cm^3$ $cm^{-3}$), and the IAST selectivity ($S_{ads}$) for $CO_2/N_2$ (15/85, v/v) is $\geq$ 500. It solves the problems that existing framework materials in the prior art cannot simultaneously achieve high carbon dioxide selectivity and high carbon dioxide adsorption capacity under low-pressure and high-humidity environments, and the framework materials have poor moisture resistance. The metal cyanide-based framework material is a branch of metal-organic framework materials.

Certain terms used herein are clearly defined below, while other terms are illustrated by relevant examples. For any term not clearly defined, it should be interpreted in conjunction with this specification before being given its conventional meaning as understood in this specification.

In the present invention, "RH" is the abbreviation of relative humidity, which refers to the ratio of the actual partial pressure of water vapor to the equilibrium (or saturation) vapor pressure of water at a given temperature.

In the present invention, "confined space" refers to an area with restricted or even almost no air circulation. For example, the $CO_2$ concentration in the confined space can be 5,000-10,000 ppm.

In the present invention, "mmol $g^{-1}$" is the unit of molar adsorption capacity ($Q_M$), which refers to the ratio of the amount of adsorbed $CO_2$ (in mmol) to the mass of the adsorbent (in g). Similarly, "$cm^3$ $cm^{-3}$" is the unit of volumetric adsorption capacity ($Q_V$), representing the ratio of the volume of adsorbed $CO_2$ (in $cm^3$) to the volume of the adsorbent (in $cm^3$). The conversion formula is:

$$q = q_A \frac{b_A p^{v_A}}{1 + b_A p^{v_A}} + q_{B,sat} \frac{b_B p^{v_B}}{1 + b_B p^{v_B}}$$

where $V_M$ is the molar volume of gas, in L $mol^{-1}$, and $V_M$ = 22.4 L $mol^{-1}$ under standard conditions; $D_{cry}$ is the crystal density of the material, in g $cm^{-3}$, and the crystal density of the framework material of the present invention is 1.7-2 g $cm^{-3}$.

In the present invention, "selectivity", "separation selectivity", or "IAST selectivity" is calculated according to the Ideal Adsorption Solution Theory (IAST). The Ideal Adsorption Solution Theory refers to the adsorption isotherm equation derived from thermodynamic laws when the mixture in the adsorption layer is treated as an ideal solution. For specific calculation methods, refer to Myers, A. L. et al. (AIChE J. 1965, 11, 121-127). First, fit the single-component adsorption isotherm to the Dual Site Langmuir-Freundlich model:

$$q = q_A \frac{b_A p^{v_A}}{1 + b_A p^{v_A}} + q_{B,sat} \frac{b_B p^{v_B}}{1 + b_B p^{v_B}}$$

where q is the adsorption capacity of gas in the mixed gas; p is the equilibrium pressure; $q_A$, $b_A$, $v_A$, $q_B$, $b_B$, and $v_B$ are constants, and these parameters are then used for IAST calculation. Through the above formula, the molar adsorption capacity $q_1$ of $CO_2$ and the molar adsorption capacity $q_2$ of $N_2$ in the mixed gas by the material under different pressures can be calculated, and the IAST selectivity ($S_{ads}$) can be further calculated according to the formula:

$$S_{\mathrm{ads}} = \frac{q_1/q_2}{p_1/p_2}$$

where $q_1$ and $q_2$ are the adsorption capacities of the material for $CO_2$ and $N_2$ in the mixed gas, respectively, and $p_1$ and $p_2$ are the molar fractions of $CO_2$ and $N_2$ in the gas phase.

In the present invention, "v/v" refers to the volume ratio of different gas components in the gas mixture.

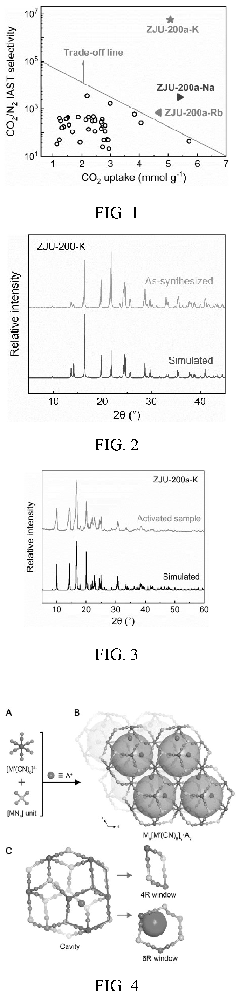

In addition, it is difficult for existing materials to achieve both high $CO_2$ adsorption capacity and selectivity, that is, there is a trade-off effect between $CO_2$ adsorption capacity and selectivity. The reason lies in the limitations of material design, which are specifically manifested as follows: on the one hand, ultramicroporous materials can achieve complete molecular sieving because their pore size is larger than $CO_2$ molecular size but smaller than $N_2$ molecular size, thereby achieving extremely high separation selectivity, but the limited pore volume leads to low $CO_2$ adsorption capacity; on the other hand, macroporous materials can achieve high $CO_2$ adsorption capacity, but they also adsorb more $N_2$, resulting in low selectivity. As shown in FIG. **1,** this figure summarizes the limitations of $CO_2$ adsorption capacity and selectivity of existing porous materials (Zhou, Y. et al. Science 373, 315-320 (2021); Hu, Y. et al. Adv. Funct. Mater. 33, 2213915 (2023)). The Trade-off line refers to the balance boundary line between $CO_2$ adsorption capacity and selectivity of existing porous materials, which is obtained by statistics of data of materials with reported performance. At present, the performance of traditional porous materials is limited within the Trade-off line, that is, the comprehensive performance of $CO_2$ adsorption capacity and $CO_2/N_2$ selectivity of the materials cannot reach the upper right of the Trade-off line. However, the porous material obtained through specific design and regulation in the present invention can break this limitation.

In the present invention, "moisture resistance" refers to the ability of the adsorbent to maintain its carbon dioxide adsorption performance in an environment with water vapor. This performance is determined by conducting under humid conditions breakthrough experiments under both dry and humid conditions.

The technical scheme of the present invention is as follows:

The invention provides a metal cyanide-based framework material, whose general structural formula is $M_x[M'(CN)_6]_y \cdot A_z \cdot nH_2O$, where M is a tetracoordinate metal ion, $1 \leq x \leq 8$; $[M'(CN)_6]$ is a hexacyanide ion, $1 \leq y \leq 6$; A is a monovalent cation, $1 \leq z \leq 6$; and $2x - 4y + z = 0$ is satisfied. n represents the water content of the material, and $0 \leq n \leq 10$. The framework material of the present invention is composed of a crystal structure, which has a unique crystal structure and unit cell parameters. When $1 \leq n \leq 10$, the XRD pattern of the crystal structure has single peaks at $2\theta = 16 \pm 2°$ and $20 \pm 2°$, and single or double peaks at $2\theta = 13 \pm 2°$, $22 \pm 2°$, and $24 \pm 2°$, the crystal structure belongs to the $R\overline{3}c$ space group (space group No. 167) in the trigonal crystal system, with unit cell parameters a = b = 11-14 Å and c = 30-34 Å. When $0 \leq n < 1$, the XRD pattern of the crystal structure has single peaks at $2\theta = 10 \pm 2°$ and $16.5 \pm 2°$, and single or double peaks at $2\theta = 14.5 \pm 2°$ and $20.2 \pm 2°$, the space group of the crystal structure transforms from the $R\overline{3}c$ space group (space group No. 167) to the $P2/c$ space group (space group No. 13), with unit cell parameters a = 15-20 Å, b = 10-14 Å, and c = 10-14 Å. The framework material is a branch of metal-organic framework materials.

It is well known to those skilled in the art that scaling x, y, z, and n in the general structural formula proportionally up or down will not change the material composition, so it still falls within the protection scope of the present invention. The crystal structure and unit cell parameters are obtained by single-crystal X-ray diffraction or powder X-ray diffraction tests in a vacuum or inert gas atmosphere. Further, the transformation of the crystal structure and unit cell parameters is reversible. When the water content of the framework material returns to $n \geq 1$, the space group of the material can be restored from the $P2/c$ space group (space group No. 13) to the $R\overline{3}c$ space group (space group No. 167).

Preferably, the crystal structure of the framework material is a dodecahedron-like cage structure. The dodecahedron-like cage structure refers to a spatial geometry surrounded by atoms and chemical bonds. Its twelve geometric faces include six hexagonal geometric faces and six quadrilateral geometric faces. Each cage has twelve windows, and the cages are connected through the windows. The monovalent cation A is in a free state in the cage. The dodecahedron-like cage structure is verified by reduction, fitting, or refinement based on XRD test data. The windows are divided into quadrilateral windows and hexagonal windows. The twelve windows of the cage include six quadrilateral windows and six hexagonal windows, corresponding to six hexagonal geometric faces and six quadrilateral geometric faces. Preferably, the diameter of the hexagonal windows is 3-4 Å, and the diameter of the quadrilateral windows is 2-3 Å. Due to their small size, the quadrilateral windows cannot allow guest molecules (gas molecules such as $CO_2$, $CH_4$, $N_2$, etc.) to pass through and only play a role in supporting the framework. The hexagonal windows can allow guest molecules to pass through and can be used as transmission windows for guest molecules. The hexagonal windows and quadrilateral windows of the cage are rigid structures, and their sizes basically do not change with changes in external conditions (see FIG. 4).

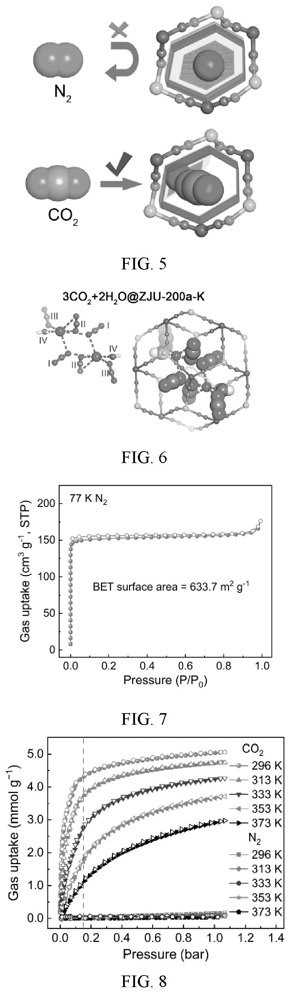

The framework material of the present invention has a unique crystal structure and unit cell parameters. The unique crystal structure and unit cell parameters can enable the framework material to have a larger dynamic pore volume and specific surface area, while exposing more monovalent cation sites. The synergistic effect of various structural factors can simultaneously achieve extremely high $CO_2$ adsorption capacity and selectivity. Further, the extremely high $CO_2$ adsorption capacity and selectivity can be achieved through the cation gating effect. The cation gating effect of the present invention means that the dodecahedron-like cage can accommodate guest molecules, while the hexagonal window allowing the transmission of guest molecules is equivalent to a "door frame". The monovalent cation is located near the hexagonal window and can selectively allow guest molecules to enter, having a "gating" effect. Among them, $CO_2$ molecules can have a strong electrostatic interaction with the monovalent cation and cause the displacement of the monovalent cation, which is equivalent to opening the cation gate, thereby allowing $CO_2$ molecules to enter the cage through the hexagonal window. However, other molecules such as $N_2$ and $CH_4$ cannot have a strong electrostatic interaction with the monovalent cation and cannot push open the cation gate, so it is difficult for them to enter the cage (FIG. 5). This unique cation gating effect is realized through the synergistic effect of the dodecahedron-like cage structure and the free cations, which, as a new type of $CO_2$ adsorption and separation mechanism, is conducive to simultaneously achieving extremely high $CO_2$ adsorption capacity and selectivity, especially $CO_2/N_2$ and $CO_2/CH_4$ selectivity. The monovalent cations in the framework material can act as $CO_2/H_2O$ co-adsorption sites, that is, after the monovalent cations adsorb water molecules, they can still adsorb $CO_2$ (FIG. 6). This co-adsorption mechanism enables the framework material to efficiently co-adsorb a large number of $CO_2$ and $H_2O$ molecules from humid gas, so that it can still maintain a high $CO_2$ adsorption capacity under high humidity conditions ($\geq$ 40% RH).

In summary, the framework material exhibits extremely high $CO_2$ adsorption capacity and selectivity in carbon dioxide capture applications, especially carbon dioxide adsorption under low pressure ($\leq$ 0.15 bar) and high humidity environment ($\geq$ 40% RH).

In some embodiments of the present invention, the tetracoordinate metal ion M is one or a combination selected from the group consisting of divalent transition metal ions $Zn^{2+}$, $Fe^{2+}$, $Co^{2+}$, $Cu^{2+}$, $Ni^{2+}$, and $Cd^{2+}$.

In some embodiments of the present invention, the hexacyanide ion $[M'(CN)_6]$ is one or a combination selected from the group consisting of $[Fe(CN)_6]^{4-}$, $[Ru(CN)_6]^{4-}$, and $[Os(CN)_6]^{4-}$.

In one embodiment of the present invention, the monovalent cation A is one or a combination selected from the group consisting of $H^+$, $NH_4^+$, $Li^+$, $Na^+$, $K^+$, $Rb^+$, $Cs^+$, and $Fr^+$.

In some embodiments of the present invention, the framework material includes but is not limited to $Zn_x[M'(CN)_6]y \cdot (NH_4)_z \cdot nH_2O$, $Zn_x[M'(CN)_6]_y \cdot Na_z \cdot nH_2O$, $Zn_x[M'(CN)_6]y \cdot K_z \cdot nH_2O$, $Zn_x[M'(CN)_6]y \cdot Rb_z \cdot nH_2O$, where $[M'(CN)_6]$ is one or a combination selected from the group consisting of $[Fe(CN)_6]^{4-}$, $[Ru(CN)_6]^{4-}$, and $[Os(CN)_6]^{4-}$, $2.5 \leq x \leq 3.5$, $1.5 \leq y \leq 2.5$, $1.5 \leq z \leq 2.5$, and $2x - 4y + z = 0$ is satisfied.

In some embodiments of the present invention, the framework material comprises elements M, M', C, N, A, H, and O, where the molar fraction of M is 5%-15%, the molar fraction of M' is 3%-10%, the molar fraction of C is 30%-45%, the molar fraction of N is 30%-45%, the molar fraction of A is 3%-10%, the molar fraction of H is 0%-40%, and the molar fraction of O is 0%-20%. The molar fractions of the elements can be tested by one or a combination of atomic absorption spectrometry (AAS), inductively coupled plasma emission spectrometry (ICP), organic elemental analysis (EA), and energy dispersive X-ray spectrometry (EDS).

In some embodiments of the present invention, the BET specific surface area of the framework material is 200-1000 $m^2$ $g^{-1}$, and the BET specific surface area can be determined by carbon dioxide, nitrogen, or argon molecules.

In some embodiments of the present invention, when $0 \leq n < 1$, the metal cyanide-based framework material has a cation gating effect. The cation gating effect is manifested in selectively allowing $CO_2$ molecules to pass through the windows, while basically not allowing $N_2$ molecules to pass through the windows, thereby achieving extremely high $CO_2/N_2$ separation selectivity and extremely high $CO_2$ adsorption capacity. Further, the cation gating effect means that under the same temperature and pressure conditions, the molar ratio of the $CO_2$ adsorption capacity to the $N_2$ adsorption capacity of the framework material is greater than 10, and the $CO_2$ adsorption capacity is greater than 3 mmol $g^{-1}$. Further, the temperature is 273-333 K. Further, the pressure is 0.15-1 bar. Further, when the temperature is 273-333 K and the pressure is 0.15-1 bar, the $N_2$ adsorption capacity of the framework material is less than 0.3 mmol $g^{-1}$. Further, when the temperature and pressure are 296 K and 1 bar, the molar ratio of the $CO_2$ adsorption capacity to the $N_2$ adsorption capacity of the framework material reaches more than 20, and the $CO_2$ adsorption capacity is greater than 4 mmol $g^{-1}$.

In some embodiments of the present invention, when $0 \leq n < 1$, at a temperature of 296-313 K and a pressure of 1 bar, calculated according to the Ideal Adsorption Solution Theory (IAST), the IAST selectivity ($S_{ads}$) of the framework material for $CO_2/N_2$ with a volume ratio of 15/85 is $\geq$ 500.

In one embodiment of the present invention, when the framework material is $Zn_3[Fe(CN)_6]_2 \cdot K_2$, the $CO_2$ adsorption capacity at 296 K and 1 bar is $\geq$ 4.5 mmol $g^{-1}$, the $N_2$ adsorption capacity is $\leq$ 0.2 mmol $g^{-1}$, and the separation selectivity ($S_{ads}$) for $CO_2/N_2$ with a volume ratio of 15/85 is $\geq$ 10,000.

Further, when $0 \leq n < 1$, within the temperature range of 196 K-333 K, the saturated $CO_2$ adsorption capacity of the framework material is greater than 3 mmol $g^{-1}$ (116 $cm^3$ $cm^{-3}$), and the saturated $N_2$ adsorption capacity is less than 0.3 mmol $g^{-1}$ (12 $cm^3$ $cm^{-3}$).

In one embodiment of the present invention, when the framework material is $Zn_{3/2}[Ru(CN)_6]\cdot K$, the $CO_2$ adsorption capacity at 296 K and 0.01 bar (10,000 ppm) is $\geq 2.1$ mmol $g^{-1}$, and the $CO_2$ adsorption capacity at 296 K and 0.005 bar (5,000 ppm) is $\geq 1.4$ mmol $g^{-1}$. Further, the IAST selectivity ($S_{ads}$) of the framework material for $CO_2/N_2$ with a volume ratio of 1/99 is $\geq 2,500$.

In some embodiments of the present invention, when the $CO_2$ pressure is 0.15 bar and the humidity is 40-80% RH, the metal cyanide-based framework material can achieve a carbon dioxide adsorption capacity of at least 3.5 mmol $g^{-1}$ (140 $cm^3$ $cm^{-3}$) at 296 K. Compared with dry conditions, the attenuation rate of carbon dioxide adsorption capacity is less than 15%, and the IAST selectivity ($S_{ads}$) for $CO_2/N_2$ (15/85, v/v) is $\geq 500$.

The invention also provides a preparation method of a metal cyanide-based framework material, which comprises the following steps:

(1) First, adjusting the pH values of the solution containing the tetracoordinate metal ion M and the solution containing the hexacyanide ion $[M'(CN)_6]$ to pH = 4-7 respectively, then mixing the two solutions and stir for reaction. The molar concentrations of the M solution and the $[M'(CN)_6]$ solution are both $\leq 1$ mol $L^{-1}$. After the reaction is completed, the framework material intermediate is obtained.

(2) Soaking the framework material intermediate in an aqueous solution or organic solution containing the monovalent cation A for ion exchange. The concentration of A ions in the solution is $\geq 0.05$ mol $L^{-1}$. Repeating the exchange step multiple times until the molar fraction of the monovalent cation A in the framework material is 3%-10%, and the framework material with a water content of $1 \leq n \leq 10$ is obtained.

Existing preparation methods usually adopt a simple room-temperature precipitation method, which is prone to form cubic structures with poor crystallinity and inherent defects. However, the preparation method of the present invention reduces the nucleation rate of coordination between M and $[M'(CN)_6]$ by adjusting the pH to adopt a weakly acidic and neutral environment (pH = 4-7) and configuring solutions of each component with specific molar concentrations, thereby improving the crystallization quality and crystal structure integrity. On the other hand, the solvothermal reaction under weakly acidic and neutral environments is conducive to the connection of M with nitrogen atoms in cyano groups in a tetracoordinate manner, thereby forming a unique crystal structure and unit cell parameters. After detection, refinement, and software fitting of the crystal structure, it is found that a dodecahedron-like cage structure can be presented. The high-temperature conditions adopted in the solvothermal reaction are also conducive to crystal growth. In summary, the preparation method of the present invention can prepare a framework material with a unique crystal structure and unit cell parameters by precisely adjusting the temperature and pH of the reaction system.

In one embodiment of the present invention, the tetracoordinate metal ion M is one or a combination selected from the group consisting of $Zn^{2+}$, $Fe^{2+}$, $Co^{2+}$, $Cu^{2+}$, $Ni^{2+}$, and $Cd^{2+}$. More preferably, the source of the tetracoordinate metal ion M is any one or a combination of zinc sulfate, zinc chloride, zinc nitrate, zinc acetate, ferrous chloride, and nickel chloride.

In one embodiment of the present invention, the hexacyanide ion $[M'(CN)_6]$ is one or a combination selected from the group consisting of $[Fe(CN)_6]^{4-}$, $[Ru(CN)_6]^{4-}$, and $[Os(CN)_6]^{4-}$. More preferably, the source of the hexacyanide ion $[M'(CN)_6]$ is any one or a combination of $K_4[Fe(CN)_6]$, $Na_4[Fe(CN)_6]$, $Li_4[Fe(CN)_6]$, $H_4[Fe(CN)_6]$, $Rb_4[Fe(CN)_6]$, and $(NH_4)_4[Fe(CN)_6]$.

In one embodiment of the present invention, in step (1), the solvent of the solution is one or a combination selected from the group consisting of water, alcohols, and DMF, more preferably water.

In one embodiment of the present invention, in step (1), the pH value is adjusted by an acid regulator one or a combination selected from the group consisting of hydrochloric acid, acetic acid, sulfuric acid, or nitric acid.

In one embodiment of the present invention, in step (1), the molar concentrations of the M solution and the $[M'(CN)_6]$ solution are 0.05-0.5 mol $L^{-1}$.

In one embodiment of the present invention, in step (1), the molar ratio of M to $[M'(CN)_6]$ is 1 : 0.1-2.

In one embodiment of the present invention, in step (1), the reaction temperature is room temperature or heating. Room temperature is usually considered as $20\pm5$ °C. Preferably, the heating temperature is $\leq 200$ °C. More preferably, the heating temperature is 50-150 °C, and the heating reaction time is 1-72 h. More preferably, the heating temperature is 60-100 °C, and the heating time is 3-24 h.

In one embodiment of the present invention, in step (2), the molar ratio of the monovalent cation A to the tetracoordinate metal ion M is $\geq 0.67$. More preferably, the molar ratio is 0.67-4.

In one embodiment of the present invention, in step (2), the concentration of A ions in the solution is 2 mol $L^{-1}$.

In one embodiment of the present invention, in step (2), the monovalent cation A is one or a combination selected from the group consisting of $H^+$, $NH_4^+$, $Li^+$, $Na^+$, $K^+$, $Rb^+$, $Cs^+$, and $Fr^+$. More preferably, the aqueous solution or organic solution containing the monovalent cation A is selected from the group consisting of aqueous solutions, alcohol solutions, and DMF solutions of LiCl, NaCl, KCl, RbCl, CsCl, FrCl, HCl, and $NH_4Cl$.

In one embodiment of the present invention, in step (2), the ion exchange temperature is 25-150 °C, preferably 25-60 °C; the exchange time is 1-72 h; the number of exchanges is 1-8 times, preferably 1-3 times.

Further, the above preparation method further includes an activation step after step (2) to make the water content $0 \leq n < 1$.

In one embodiment of the present invention, the activation step includes one or a combination of decompression, heating, or gas purging.

In one embodiment of the present invention, the decompression method is to keep the material obtained in step (2) in an environment with a vacuum degree of 0.1-100 Pa. More preferably, the vacuum degree is 0.1-10 Pa.

In one embodiment of the present invention, the heating method is to keep the ambient temperature of the material obtained in step (2) at 50-300 °C. More preferably, the temperature is 150 °C.

In one embodiment of the present invention, the gas purging method can use one or a combination of nitrogen, argon, helium, air, or steam. More preferably, it is nitrogen.

In one embodiment of the present invention, the activation time is 3-48 hours.

The unique preparation method combined with the activation method of the present invention can prepare an activated crystal structure with P2/c space group. Compared with materials containing solvent molecules reported by other preparation methods, the solvent molecules (water, ethanol, etc.) of the activated material have been completely removed, making it exhibit a larger dynamic pore volume and specific surface area. In addition, the complete removal of solvent molecules will also release more cation sites and promote the migration of cations to the vicinity of hexagonal windows, thereby utilizing the new cation gating effect to achieve high $CO_2$ adsorption capacity, selectivity, and adsorption kinetics. In summary, the unique activation method of the present invention can completely remove solvent molecules and cause structural transformation of the material, significantly improving the adsorption capacity, selectivity, and kinetics of the material for $CO_2$ gas.

The invention also provides a physical adsorbent for $CO_2$ capture, comprising the framework material as described above or the framework material prepared by the preparation method as described above.

The invention also provides a method for adsorbing $CO_2$, which uses the physical adsorbent as described above to contact with $CO_2$ gas.

The invention also provides a $CO_2$ adsorption device, comprising the physical adsorbent as described above, or using the adsorption method as described above. Preferably, the adsorption device includes but is not limited to an adsorption bed, an adsorption pipeline, and an adsorption chamber.

The invention also provides an application for adsorbing $CO_2$, which uses the physical adsorbent as described above, or the adsorption method as described above, or the adsorption device as described above. Preferably, the application for adsorbing $CO_2$ includes but is not limited to flue gas $CO_2$ capture ($CO_2$ concentration is 3-15%), biogas $CO_2$ capture ($CO_2$ concentration is 15-50%), and confined space $CO_2$ capture ($CO_2$ concentration is 5,000-10,000 ppm).

Further, the method for adsorbing $CO_2$ is any one of fixed-bed adsorption, moving-bed adsorption, fluidized-bed adsorption, or rotary adsorption, and specifically includes but is not limited to the following steps:

(1) Under adsorption temperature and pressure, pass the flue gas generated after combustion into an adsorber filled with adsorbent, and detect nitrogen at the outlet.
(2) When the carbon dioxide concentration at the outlet is the same as the inlet concentration, stop passing the flue gas, and desorb the adsorbed carbon dioxide through one or more activation methods such as decompression, heating, or gas purging until no carbon dioxide gas is detected at the outlet, so as to regenerate the framework material.

Preferably, the adsorption temperature is 273-473 K, and the adsorption pressure is 0-10 bar. More preferably, the adsorption temperature is 273-373 K, and the separation effect is the best within this adsorption temperature range.

## ADVANTAGES OF THE INVENTION

(1) The unique framework material of the present invention contains free monovalent cations inside, has a unique crystal structure and unit cell parameters. The unique crystal structure and unit cell parameters can enable the framework material to have a larger dynamic pore volume and specific surface area, while exposing more monovalent cation sites. The synergistic effect of various structural factors can simultaneously achieve extremely high $CO_2$ adsorption capacity and selectivity, especially $CO_2/N_2$ and $CO_2/CH_4$ selectivity. This beneficial effect can be explained by the cation gating effect: the framework material of the present invention has a unique dodecahedron-like cage structure composed of six hexagonal windows and six quadrilateral windows, which is proved by reduction, fitting, or refinement after XRD test. The windows are geometric planes composed of multiple atoms and chemical bonds. The synergistic effect of the dodecahedron-like cage structure, the windows, and the monovalent cations in the cage enables $CO_2$ molecules to pass through the windows and be adsorbed in large quantities, while other molecules such as $N_2$ and $CH_4$ can basically not pass through the windows, thereby achieving extremely high $CO_2$ adsorption capacity and selectivity, especially $CO_2/N_2$ and $CO_2/CH_4$ selectivity, breaking through the trade-off line between adsorption capacity and selectivity of existing materials in the field of $CO_2$ capture.

(2) The framework material of the present invention exhibits a unique $CO_2/H_2O$ co-adsorption mechanism, and has better moisture resistance compared with traditional zeolites and existing porous framework materials. It exhibits the highest $CO_2$ adsorption capacity and selectivity in carbon dioxide capture applications in humid environments, especially carbon dioxide adsorption under low pressure ($\leq 0.15$ bar) and high humidity environment ($\geq 40\%$ RH). Under the conditions of 296 K, 0.15 bar, and 40-80% RH, it can achieve a carbon dioxide adsorption capacity of at least 3.5 mmol g$^{-1}$ (140 cm$^3$ cm$^{-3}$), and the IAST selectivity ($S_{ads}$) for $CO_2/N_2$ (15/85, v/v) is $\geq 500$. It solves the problems that existing framework materials in the prior art cannot simultaneously achieve high carbon dioxide selectivity and high carbon dioxide adsorption capacity under low-pressure and high-humidity environments, and the comprehensive performance is significantly better than currently reported adsorbent materials.

(3) The preparation method of the present invention adopts a unique pH adjustment step and configures solutions of each component with specific molar concentrations, which can reduce the nucleation rate of coordination between M and [M'(CN)$_6$], improve the crystallization quality and crystal structure integrity, and prepare the framework material with high crystallinity and specific crystal structure of the present invention.

(4) The unique activation step in the preparation method of the present invention can transform the crystal structure of the material into a $P2/c$ structure more conducive to adsorption. Due to the complete removal of solvent molecules, the activated structure has a larger dynamic pore volume and specific surface area, and also exposes more cation sites and promotes the migration of cations to the vicinity of the windows, thereby utilizing the new cation gating effect to achieve higher $CO_2$ adsorption capacity, selectivity, and kinetics.

(5) The framework material of the present invention does not contain complex and expensive organic ligands, and is only composed of simple and cheap metal salts and inorganic ligands, with low raw material cost. At the same time, no toxic organic solvents need to be added during the synthesis process, and only water can be used as the solvent, making the synthesis green and environmentally friendly. In addition, it can be synthesized by rapid stirring at a relatively low temperature (50 °C), which is easy for large-scale mass production, so it has excellent engineering performance.

In summary, the metal cyanide-based framework material with cation gating effect provided by the present invention exhibits extremely high $CO_2$ adsorption capacity and extremely high selectivity in $CO_2$ adsorption applications, and can still maintain extremely high $CO_2$ adsorption capacity and extremely high selectivity under humid conditions. It successfully breaks through the trade-off line between $CO_2$ adsorption capacity and selectivity of existing framework materials in the prior art, as well as the problem that high carbon dioxide selectivity and high carbon dioxide adsorption capacity cannot be simultaneously achieved under low-pressure and high-humidity environments. At the same time, it has excellent moisture resistance and engineering performance, and the comprehensive performance surpasses all currently publicly reported adsorption systems, becoming a new benchmark material. Using this material as a physical adsorbent can be applied to flue gas $CO_2$ capture, biogas $CO_2$ capture, and confined space $CO_2$ capture, successfully realizing efficient, low-consumption, and low-cost capture of carbon dioxide, and providing new method guidance for the field of $CO_2$ capture.

**BRIEF DESCRIPTION OF THE DRAWINGS**

FIG. **1** is a diagram showing the trade-off line between $CO_2$ adsorption capacity and selectivity of porous materials reported in existing literature (Zhou, Y. et al. Science 373, 315-320 (2021); Hu, Y. et al. Adv. Funct. Mater. 33, 2213915 (2023)) and the $CO_2$ adsorption capacity and selectivity performance of Examples **1, 2,** and **3** of the present invention.

FIG. **2** is a PXRD pattern of the unactivated material in Example **1**.

FIG. **3** is a PXRD pattern of the activated material in Example **1**.

FIG. **4** is a schematic diagram of the structure of the material in Example **1,** where A in FIG. **4** is a schematic diagram of the structure of the synthetic raw materials, B in FIG. **4** is a schematic diagram of the crystal structure of the material, and C in FIG. **4** is a schematic diagram of the structure of the cage and the window.

FIG. **5** is a schematic diagram of the cation gating effect.

FIG. **6** is a schematic diagram of the $CO_2/H_2O$ co-adsorption crystal structure of the material in Example **1.**

FIG. **7** is a 77 K $N_2$ full adsorption curve of the material in Example 1.

FIG. **8** is a single-component isothermal adsorption curve of $CO_2$ and $N_2$ of the material in Example **1** at 296-373 K.

FIG. **9** is an adsorption heat curve of $CO_2$ and $N_2$ of the material in Example **1.**

FIG. **10** is a performance comparison diagram between the material in Example **1** and other adsorbent materials.

FIG. **11** is an adsorption kinetics curve of the material in Example **1** for 15/85 $CO_2/N_2$ at 296 K under a flow rate of 200 mL min$^{-1}$.

FIG. **12** is a desorption kinetics curve of the material in Example **1** under $N_2$ purging at 373 K under a flow rate of 200 mL min$^{-1}$.

FIG. **13** is a dynamic breakthrough experiment curve of the material in Example **1** for $CO_2/N_2$ (15/85, v/v) mixed gas under dry and different humidity conditions.

FIG. **14** is a diagram of the $CO_2$ adsorption capacity of the material in Example **1** under different humidity conditions.

FIG. **15** is a dynamic breakthrough cycle test curve of the material in Example **1** under a simulated flue gas environment containing 50 ppm $SO_2$ and 100 ppm NO.

FIG. **16** is a test curve of the material in Example **1** for 50 consecutive adsorption-desorption cycles under the conditions of a carbon dioxide concentration of 15%, a relative humidity of 60%, and a regeneration temperature of 423 K.

FIG. **17** is a PXRD pattern of the material in Example **1** after treatment with acid-base water and exposure to acid gases such as $SO_2$ and NO.

FIG. **18** is a $CO_2$ adsorption curve of the material in Example **1** after treatment under various conditions.

FIG. **19** is a single-component adsorption isotherm diagram of $CO_2$ and $CH_4$ of the material in Example **1** at 296 K.

FIG. **20** is an IAST selectivity diagram of the material in Example **1** for $CO_2/CH_4$ (50/50, v/v) at 296 K.

FIG. **21** is a dynamic breakthrough experiment curve of the material in Example **1** for $CO_2/CH_4$ (50/50, v/v) mixed gas under dry conditions.

FIG. **22** is an SEM image of a single crystal sample of the material in Example **1.**

FIG. **23** is an SEM image of a powder sample of the material in Example 1.

FIG. **24** is a PXRD pattern of the materials in Examples **1-4.**

FIG. **25** is a 77 K $N_2$ full adsorption curve of the material in Example **2.**

FIG. **26** is a single-component isothermal adsorption curve of $CO_2$ and $N_2$ of the material in Example **2** at 296 K.

FIG. **27** is a $CO_2/N_2$ IAST selectivity curve of the material in Example **2** at 296 K.

FIG. **28** is an adsorption heat curve of $CO_2$ of the material in Example **2.**

FIG. **29** is a 77 K $N_2$ full adsorption curve of the material in Example **3.**

FIG. **30** is a single-component isothermal adsorption curve of $CO_2$ and $N_2$ of the material in Example **3** at 296 K.

FIG. **31** is a $CO_2/N_2$ IAST selectivity curve of the material in Example **3** at 296 K.

FIG. **32** is a single-component isothermal adsorption curve of $CO_2$ of the material in Example **3** at 296-313 K.

FIG. **33** is an adsorption heat curve of $CO_2$ of the material in Example **3.**

FIG. **34** is a PXRD pattern of the material in Example **5.**

FIG. **35** is a single-component isothermal adsorption curve of $CO_2$ and $N_2$ of the material in Example **5** at 296 K.

FIG. **36** is an IAST separation selectivity diagram of the material in Example **5** for $CO_2/N_2$ (10/90, v/v) mixed gas at 296 K.

FIG. **37** is an adsorption heat diagram of carbon dioxide and nitrogen of the material in Example **5** at 296 K.

FIG. **38** is a PXRD pattern of the material in Example **9.**

FIG. **39** is a single-component isothermal adsorption curve of $CO_2$ and $N_2$ of the material in Example **9** at 296 K.

FIG. **40** is a comparison diagram of the $CO_2$ adsorption capacity and corresponding $CO_2$ adsorption heat of the material in Example **9** and other adsorbents at 5,000 ppm.

FIG. **41** is a dynamic breakthrough curve of the material in Example **9** for $CO_2/N_2$ mixed gas with a $CO_2$ concentration of 5,000 ppm under dry conditions.

FIG. **42** is a process diagram of kilogram-scale synthesis of the material in Example **11.**

FIG. **43** is a PXRD pattern of the material in Example **11** after kilogram-scale synthesis.

FIG. **44** is a single-component isothermal adsorption curve of $CO_2$ of the kilogram-scale synthesized material in Example **11** at 296 K.

FIG. **45** is a PXRD pattern of the material in Comparative Example **1.**

FIG. **46** is a single-component adsorption curve of $N_2$ of the material in Comparative Example **1** at 77 K.

FIG. **47** is a single-component adsorption curve of $CO_2$ of the material in Comparative Example **1** at 296 K.

FIG. **48** is a dynamic breakthrough experiment test curve of the material in Comparative Example **1** for dry and humid 15/85 (v/v) $CO_2/N_2$ at 296 K.

FIG. **49** is a single-component adsorption curve of $N_2$ of the material in Comparative Example **2** at 77 K.

FIG. **50** is a single-component adsorption curve of $CO_2$ of the material in Comparative Example **2** at 296 K.

FIG. **51** is a dynamic breakthrough experiment test curve of the material in Comparative Example **2** for dry and humid 15/85 (v/v) $CO_2/N_2$ at 296 K.

FIG. **52** is a PXRD pattern of the material in Comparative Example **3.**

FIG. **53** is a single-component adsorption curve of $N_2$ of the material in Comparative Example **3** at 77 K.

FIG. **54** is a single-component adsorption curve of $CO_2$ and $N_2$ of the material in Comparative Example **3** at 296 K.

FIG. **55** is a dynamic breakthrough experiment test curve of the material in Comparative Example **3** for dry and humid 15/85 (v/v) $CO_2/N_2$ at 296 K.

FIG. **56** is a comparison diagram of the $CO_2$ adsorption capacity of the material in Example **1** and Comparative Examples **1-3** under dry and 40% RH conditions.

FIG. **57** is a comparison diagram of the $CO_2$ adsorption capacity of the material in Example **1** and Comparative Examples **1-3** under dry and different humidity conditions.

FIG. **58** is a PXRD pattern of the material in Comparative Example **4**.

## DETAILED DESCRIPTION OF THE EMBODIMENTS

The content of the present invention will be further clarified below in conjunction with examples, but these examples do not limit the protection scope of the present invention. Based on the technical solution of the present invention, various modifications or variations that can be made by those skilled in the art without creative work still fall within the protection scope of the present invention.

The detection methods of the present invention are as follows:

The crystal structure and unit cell parameters of the framework material of the present invention can be obtained by single-crystal X-ray diffraction or powder X-ray diffraction tests in a vacuum or inert gas atmosphere.

The dodecahedron-like cage structure, hexagonal window structure, and quadrilateral window structure of the framework material of the present invention can obtain the structural morphology of the framework material by reduction, fitting, or refinement based on X-ray diffraction (XRD) data.

The test conditions for powder X-ray diffraction (PXRD) are: the radiation source is Cu-K$\alpha$ radiation ($\lambda$ = 1.54184 Å), the scanning range is 2-45°, and the scanning speed is 5° min$^{-1}$.

The test conditions for single-crystal X-ray diffraction (SCXRD) are: a Bruker D8 single-crystal diffractometer is used for testing, the radiation source is a Cu target or Mo target, the test temperature is 200-300 K, and the test step size is 1-2°. The APEX3 software is used to collect, integrate, scale, and average the SCXRD test data, and the SHELX software is used for structure analysis and refinement to obtain the crystal structure data (CIF file) of the material.

Test of dodecahedron-like cage structure: Through the crystal structure data (CIF file) of the material obtained by XRD test, the dodecahedron-like cage structure of the material is determined using crystal structure processing software, and the display mode of atoms and chemical bonds is a ball-and-stick model. The dodecahedron-like cage structure refers to a spatial geometry surrounded by atoms and chemical bonds. Its twelve geometric faces include six hexagonal geometric faces and six quadrilateral geometric faces. Each cage has twelve windows, and the cages are connected through the windows. The monovalent cation A is in a free state in the cage. The windows are divided into quadrilateral windows and hexagonal windows. The twelve windows of the cage include six quadrilateral windows and six hexagonal windows, corresponding to six hexagonal geometric faces and six quadrilateral geometric faces. The crystal structure processing software includes but is not limited to Diamond software, Materials Studio software, and Olex software.

Determination of window size: The sizes of quadrilateral and hexagonal windows are determined using the measurement tools in Diamond software, Materials Studio software, and Olex software. The window size is defined as the distance from the vertex atom of the quadrilateral or hexagonal window to the vertex atom of the opposite side.

The molar ratio of elements can be tested by one or a combination of atomic absorption spectrometry (AAS), inductively coupled plasma emission spectrometry (ICP), X-ray fluorescence spectrometry (XRF), organic elemental analysis (EA), and energy dispersive X-ray spectrometry (EDS).

The BET specific surface area can be determined by carbon dioxide, nitrogen, or argon molecules.

Gas adsorption isotherm test: An ASAP 2020 physical adsorption instrument is used to test the adsorption isotherms of the activated material for different gases, and a circulating water bath device is used to maintain the temperature of the test sample constant. The test temperature range is 273--373 K, and the pressure range is 0.001-1 bar, so as to obtain the gas adsorption capacity of the activated material at a specific temperature and pressure.

The breakthrough experiment under dry and humid conditions is operated as follows: the sample is packed into a stainless steel sample column. The inlet of the sample column is used to pass the mixed gas, and the outlet is connected to a gas chromatograph to detect the composition and concentration of the gas at the outlet. Before the test, the sample column is heated to 100 °C and purged with nitrogen to remove the solvent molecules in the pores of the material, completing the activation of the material. Then, under ambient conditions, the mixed gas of carbon dioxide with different humidity (relative humidity is 0%, 40%, 60%, 80% respectively) is passed into the sample column, and the composition and concentration of the gas passing through the outlet are recorded at the same time. When carbon dioxide is detected at the outlet, the test is terminated. According to the obtained breakthrough curve, the adsorption capacity of the material for carbon dioxide under different humidity conditions can be calculated.

Naming rules of samples in the present invention:

The general structural formula of the framework material of the present invention is $M_x[M'(CN)_6]y \cdot A_z \cdot nH_2O$. For the

convenience of representation in the examples and drawings, it is named ZJU-XXX-A, where ZJU is the abbreviation of Zhejiang University, XXX represents the metal cyanide framework $M_x[M'(CN)_6]_y$, and A represents the monovalent cation $A_z$. For example, ZJU-200-K is $Zn_3[Fe(CN)_6]_2 \cdot K_2 \cdot nH_2O$, ZJU-200-Na is $Zn_3[Fe(CN)_6]_2 \cdot Na_2 \cdot nH_2O$, ZJU-201-K is $Zn_3$ $[Os(CN)_6]_2 \cdot K_2 \cdot nH_2O$, ZJU-202-K is $Zn_3[Ru(CN)_6]_2 \cdot K_2 \cdot nH_2O$, where $0 \leq n \leq 10$.

To distinguish between activated and unactivated materials, ZJU-XXXa-A specifically refers to the material treated by the activation step (a is the abbreviation of activated). For example, ZJU-200a-K is $Zn_3[Fe(CN)_6]_2 \cdot K_2 \cdot nH_2O$, where $0 \leq n < 1$. The activation step is used to remove solvent molecules such as water molecules in the pores of the material as much as possible, so that the material exhibits a larger dynamic pore volume and specific surface area, and releases more cation sites, thereby being used for gas adsorption, especially $CO_2$ adsorption.

**Example 1 ZJU-200-K**

**Material Preparation:** Prepare 9 mL of 0.05 M zinc sulfate aqueous solution and 6 mL of 0.05 M potassium ferrocyanide aqueous solution. Adjust the pH of both solutions to 6-7 with 2 M $CH_3COOH$ respectively, then mix the two solutions for hydrothermal reaction, stirring continuously at 60 °C for 3 hours. After the reaction is completed, the intermediate product is obtained by filtration and washing. Subsequently, soak the intermediate product in 9 mL of 0.2 M potassium chloride aqueous solution, perform ion exchange at 60 °C for 2 days (3 times in total), then suction filter and wash to obtain the powder product ZJU-200-K.

**Structural Characterization of Unactivated Sample ZJU-200-K:** The PXRD test result of unactivated ZJU-200-K is the red curve in FIG. 2, showing single peaks at $2\theta = 16.4°$, $19.7°$, and $21.8°$, and double peaks at $2\theta = 13.5$-$14.2°$ and $24.3$-$24.6°$. The PXRD pattern of the unactivated sample can be tested in an air environment.

Use APEX3 software to collect, integrate, scale, and average the SCXRD test data of ZJU-200-K, and use SHELX software for structure analysis and refinement to obtain the crystal structure data of ZJU-200-K. It is confirmed that its crystal structure belongs to the *R3c* space group (space group No. 167) with unit cell parameters a = b = 11-14 Å and c = 30-34 Å, and the structural formula is $Zn_3[Fe(CN)_6]_2 \cdot K_2 \cdot 8H_2O$. Based on the obtained crystal structure data, the corresponding PXRD pattern is simulated with the help of Materials Studio software (the black curve in FIG. 2). Comparing the black simulated curve and the red experimental curve in FIG. 2, their characteristic peaks are basically consistent, confirming the reliability of the crystal structure data of ZJU-200-K.

**Structural Characterization of Activated Sample ZJU-200a-K:** Further activate ZJU-200-K by first vacuumizing the sample at room temperature for 12 hours, then vacuumizing at 150 °C for 4 hours to obtain the fully activated material ZJU-200a-K. The PXRD pattern of ZJU-200a-K is the red curve in FIG. **3,** showing single peaks at $2\theta = 10°$, $14.5°$, and $16.6°$, and a double peak at $2\theta = 20.1°$. The PXRD pattern of the activated sample can be tested in an inert atmosphere. Activation is used to remove water molecules in the material as much as possible; "fully activated" means no water molecules are detected in the material, which can be confirmed by PXRD and SCXRD tests.

Use APEX3 software to collect, integrate, scale, and average the SCXRD test data of ZJU-200a-K, and use SHELX software for structure analysis and refinement to obtain the crystal structure data of ZJU-200a-K. It is confirmed that its crystal structure belongs to the *P2/c* space group (space group No. 13) with unit cell parameters a = 15-20 Å, b = 10-14 Å, and c = 10-14 Å, and the structural formula is $Zn_3[Fe(CN)_6]_2 \cdot K_2$. This crystal structure and unit cell parameters enable the material to have a larger dynamic pore volume and specific surface area, while exposing more monovalent cation sites. The synergistic effect of various structural factors achieves both high $CO_2/N_2$ selectivity and $CO_2$ adsorption capacity. Based on the obtained crystal structure data, the corresponding PXRD pattern is simulated with the help of Materials Studio software (the black curve in FIG. 3). Comparing the black simulated curve and the red experimental curve in FIG. 3, their characteristic peaks are basically consistent, confirming the reliability of the crystal structure data of ZJU-200a-K.

Based on the crystal structure data of ZJU-200a-K, the dodecahedron-like cage structure of ZJU-200a-K is determined using Diamond software (FIG. **4**). Each cage (Cavity, the yellow sphere in FIG. **4**) has twelve windows, including six hexagonal windows (6R window) and six quadrilateral windows (4R window), and the monovalent cation A is in a free state inside the cage. The cage is a geometric body surrounded by atoms and chemical bonds, and the windows are the geometric faces of the geometric body. Using the measurement tool in Diamond software, the diameter of the hexagonal windows is determined to be 3-4 Å, and the diameter of the quadrilateral windows is 2-3 Å. Due to their small size, the quadrilateral windows cannot allow guest molecules (such as $CO_2$, $N_2$ and other gas molecules) to pass through and only play a role in supporting the framework, while the hexagonal windows can allow guest molecules to pass through and serve as transmission windows for guest molecules. In addition, the hexagonal and quadrilateral windows of the cage are rigid structures, and their sizes basically do not change with changes in external conditions.

**Study on Cation Gating Effect:** The unique crystal structure parameters and dodecahedron-like cage structure of ZJU-200a-K endow it with a cation gating effect. To intuitively present this effect, a schematic diagram of the cation gating effect is constructed using Diamond software based on the crystal structure data of ZJU-200a-K (FIG. 5). As shown in the FIG. 5, the cation gating effect means that the dodecahedron-like cage can accommodate guest molecules, while the hexagonal window allowing the transmission of guest molecules is equivalent to a "door frame". The monovalent cation is located near the hexagonal window and can selectively allow guest molecules to enter, exerting a "gating" effect. Among them, $CO_2$ molecules can form a strong electrostatic interaction with the monovalent cation and cause displacement of the monovalent cation, which is equivalent to opening the cation gate, thereby allowing $CO_2$ molecules to enter the cage through the hexagonal window. However, other molecules such as $N_2$ cannot form a strong electrostatic interaction with the monovalent cation and cannot push open the cation gate, making it difficult for them to enter the cage. This unique cation gating effect, as a new type of $CO_2$ adsorption and separation mechanism, is conducive to simultaneously achieving extremely high $CO_2/N_2$ selectivity and $CO_2$ adsorption capacity.

**Study on $CO_2/H_2O$ Co-adsorption Mechanism:** Place a single crystal of ZJU-200a-K into a capillary glass tube with an inner diameter of 0.1 mm. Vacuumize the crystal at 393 K for 4 hours, then pressurize the capillary glass tube to 1 bar with $CO_2/H_2O$ mixed gas, seal it, and transfer it to a single-crystal diffractometer for testing. Use APEX3 software to collect, integrate, scale, and average the SCXRD test data, and use SHELX software for structure analysis and refinement to obtain the crystal structure data of ZJU-200-K co-adsorbing $CO_2/H_2O$. A schematic diagram of ZJU-200-K co-adsorbing $CO_2/H_2O$ is constructed using Diamond software (FIG. 6). As shown in the FIG. **6,** the monovalent cations inside the cage of ZJU-200a-K can act as $CO_2/H_2O$ co-adsorption sites, that is, after the cations adsorb water molecules, they can still adsorb $CO_2$. This overcomes the problem that the adsorption sites of traditional adsorbent materials cannot adsorb $CO_2$ after adsorbing $H_2O$, enabling ZJU-200-K to maintain extremely high $CO_2$ adsorption capacity and selectivity in high-humidity environments ($\geq$ 40% RH), which is superior to current material systems.

**$CO_2$ Adsorption Capacity:** A 77 K nitrogen full adsorption test is performed on ZJU-200a-K, and the result is shown in FIG. 7. The BET specific surface area of ZJU-200a-K is further calculated to be 633.7 $m^2$ $g^{-1}$, proving that the material has good porosity and can accommodate a large number of $CO_2$ molecules.

The single-component adsorption curves of $CO_2$ and $N_2$ by ZJU-200a-K at 296-373 K are tested, and the results are shown in FIG. **8.** At 296 K and 1 bar, the $CO_2$ adsorption capacity of ZJU-200a-K is 5.02 mmol $g^{-1}$ (196 $cm^3$ $cm^{-3}$), which exceeds the currently reported materials, and the $N_2$ adsorption capacity is only 0.17 mmol $g^{-1}$ (6.6 $cm^3$ $cm^{-3}$), with a molar ratio of $CO_2$ to $N_2$ adsorption capacity of 30.

**IAST Selectivity:** Further calculate the IAST selectivity of ZJU-200a-K for $CO_2/N_2$ (15/85, v/v) mixed gas according to the formula listed in the test method. The corresponding IAST calculation parameters are shown in Table 1:

Table 1: Parameters for IAST Selectivity Calculation of ZJU-200a-K Fitted Based on Dual Site Langmuir Freundlich Model

| T (K) | | Site A | | | Site B | | |
|---|---|---|---|---|---|---|---|
| | | $q_A$ mol kg$^{-1}$ | $b_A$ kPa$^{-vA}$ | $v_A$ dimension less | $q_B$ mol kg$^{-1}$ | $b_B$ kPa$^{-vA}$ | $v_B$ dimension less |
| 296 | $CO_2$ | 489.45302 | 0.00425 | 0.09391 | 1.80161 | 0.07703 | 1.64295 |
| | $N_2$ | 0.0163 | 1.50178E-13 | 6.08108 | 2.97855 | 7.25086E-4 | 0.90525 |
| 313 | $CO_2$ | 281.36748 | 0.00422 | 0.14246 | 2.43429 | 0.06031 | 1.5107 |
| | $N_2$ | 0.19157 | 8.39892E-6 | 1.99777 | 1.77057 | 9.78917E-4 | 0.77308 |
| 333 | $CO_2$ | 4.47343 | 0.18357 | 0.5613 | 1.08392 | 0.02024 | 1.66508 |
| | $N_2$ | 0.00125 | 3.6935E-15 | 7.13001 | 1.28673 | 9.55318E-5 | 0.79809 |
| 353 | $CO_2$ | 4.79009 | 0.053 | 0.85222 | 0.16746 | 9.33965E-13 | 10.30914 |
| | $N_2$ | 3.11684E-4 | 3.69341E-15 | 7.13002 | 0.32174 | 9.55153E-5 | 0.79809 |
| 373 | $CO_2$ | 4.68554 | 0.02267 | 0.84524 | 0.44857 | 0.0056 | 1.95291 |
| | $N_2$ | -0.00244 | 3.83972E42 | -64.78872 | -34.2511 | 1.175E-5 | 1.24975 |

Based on the parameters in Table **1,** the IAST selectivity of ZJU-200a-K for $CO_2/N_2$ (15/85, v/v) at 296 K and 1 bar is calculated to be $5.6 \times 10^6$, which is much higher than the currently reported materials. This simultaneous high $CO_2$ adsorption capacity and $CO_2/N_2$ selectivity breaks through the trade-off line of existing technologies (see FIG. **1**), confirming the cation gating effect of ZJU-200a-K.

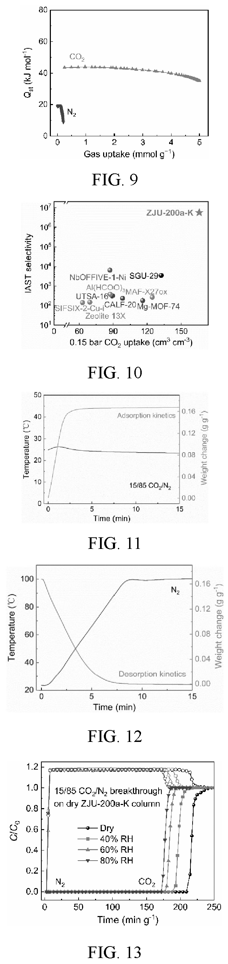

The simultaneous high adsorption capacity and selectivity of ZJU-200a-K successfully solves the problem that existing technologies cannot simultaneously achieve high carbon dioxide selectivity and high carbon dioxide adsorption capacity. The performance comparison with other benchmark materials is shown in FIG. **9**, confirming the technological breakthrough brought by the framework material with cation gating effect created by the present invention.

Based on the single-component adsorption curves at different temperatures, the adsorption heats of $CO_2$ and $N_2$ by ZJU-200a-K are calculated respectively (FIG. **10**). It can be seen that the initial adsorption heat of ZJU-200a-K for $CO_2$ is 43.6 kJ mol$^{-1}$, which is significantly higher than the initial adsorption heat for $N_2$ (18.7 kJ mol$^{-1}$).

**Adsorption and Desorption Kinetics of $CO_2$:** Further tests on the adsorption and desorption kinetics of $CO_2$ by ZJU-200a-K are conducted, as shown in FIG. **11** and **12.** For the room-temperature 15/85 $CO_2/N_2$ mixed gas, ZJU-200a-K approaches adsorption saturation in about 2.5 minutes; under $N_2$ purging at 373 K, ZJU-200a-K is basically completely desorbed within 8 minutes. The test results show that ZJU-200a-K has excellent $CO_2$ adsorption and desorption kinetics.

**Breakthrough Test and Moisture Resistance:** A dynamic fixed-bed breakthrough experiment is adopted to evaluate the actual separation effect of ZJU-200a-K on 15/85 $CO_2/N_2$ mixed gas. As shown in FIG. **13,** $CO_2$ breaks through after 212 min g$^{-1}$, and the calculated dynamic $CO_2$ adsorption capacity is 4.30 mmol g$^{-1}$.

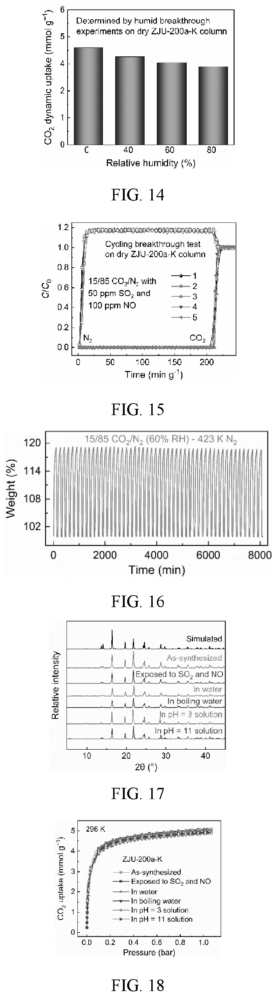

To evaluate the moisture resistance of the material, the humid 15/85 $CO_2/N_2$ mixed gas is passed into the adsorption bed until $CO_2$ breakthrough is observed. The dynamic $CO_2$ adsorption capacity at high relative humidity (80% RH) is determined to be 4.1 mmol g$^{-1}$, with an attenuation rate of less than 10% compared with dry conditions. The nitrogen adsorption capacity is 0.01 mmol g$^{-1}$, and the calculated IAST selectivity is as high as 2323, further confirming that the material has a strong adsorption capacity for $CO_2$ even in humid environments. The $CO_2$ adsorption capacity at different humidity levels is shown in FIG. **14,** indicating that the material has a high $CO_2$ adsorption capacity in high-humidity flue gas $CO_2$ capture applications. Cyclic breakthrough experiments on mixed gas containing 50 ppm $SO_2$ and 100 ppm NO show that ZJU-200a-K can still maintain good separation performance under conditions containing acidic gas impurities (see FIG. **15**).

**Stability Test:** The cyclic stability of ZJU-200-K is tested. The test process includes $CO_2$ adsorption under humid $CO_2/N_2$ (15/85, v/v) conditions and desorption by heating in a $N_2$ stream at 423 K. This process is performed continuously for 50 cycles (FIG. **16**). The results show that there is no significant loss in the $CO_2$ adsorption capacity of the material, indicating that ZJU-200a-K has excellent cyclic stability against moisture.

To characterize the chemical stability of ZJU-200-K, the freshly synthesized samples are exposed to acidic gases (50 ppm $SO_2$ and 100 ppm NO) or soaked in boiling water and solutions with pH = 3 and 11 for 3 days, respectively. The PXRD patterns and $CO_2$ adsorption curves of the samples are tested, and the results are shown in FIG. **17** and **18.** It can be seen that the positions and intensities of the diffraction peaks and the $CO_2$ adsorption performance basically do not change, indicating that it has excellent chemical stability.

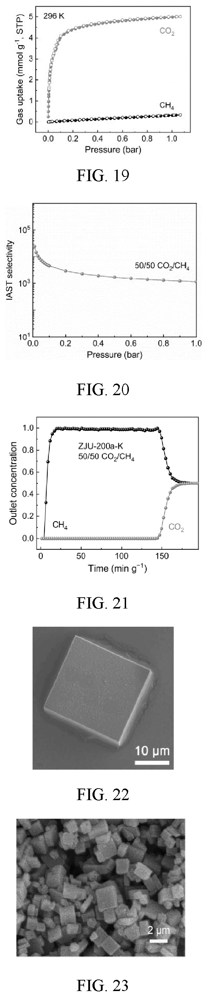

**$CO_2/CH_4$ Selectivity in Biogas $CO_2$ Capture Application:** The main component of biogas is methane ($CH_4$), which usually contains 50%-80% $CH_4$, 15%-50% $CO_2$, and 0%-5% $N_2$. To evaluate the ability of the material to selectively capture $CO_2$ from biogas, the adsorption isotherms of carbon dioxide and methane by ZJU-200a-K are determined (FIG. **19**). Further calculation shows that the IAST selectivity of ZJU-200a-K for $CO_2/CH_4$ (50/50, v/v) mixed gas is 1149 (FIG. **20**), indicating that the material can selectively adsorb $CO_2$ from biogas. The dynamic fixed-bed breakthrough experiment of $CO_2/CH_4$ (50/50, v/v) mixed gas shows that ZJU-200a-K can efficiently capture $CO_2$ from $CO_2/CH_4$ mixed gas (FIG. **21**).

**Microscopic Morphology:** To characterize the morphology of ZJU-200-K, SEM images of single crystal samples and powder samples are taken respectively (FIG. **22** and **23**). As shown in the FIG. **22** and **23,** ZJU-200-K with good crystallinity can be massive particles, and the size of its single crystal particles can be larger than 20 $\mu$m, and the size of powder particles can be larger than 1 $\mu$m.

**Example 2 ZJU-200-Na**

**Material Preparation:** Prepare 6 mL of 1 M zinc sulfate aqueous solution and 9 mL of 1 M sodium ferrocyanide aqueous solution. Adjust the pH of both solutions to 5-6 with 2 M $CH_3COOH$ respectively, then mix the two solutions for solvothermal reaction, stirring continuously at 80 °C for 6 hours. After the reaction is completed, the intermediate product is obtained by filtration, washing, and drying. Subsequently, soak the intermediate product in 6 mL of 0.67 M sodium chloride aqueous solution, perform ion exchange at 25 °C for 2 days (3 times in total), then suction filter and wash to obtain the powder product ZJU-200-Na.

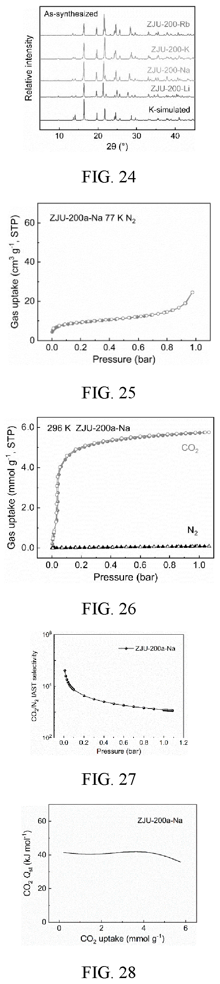

**Structural Characterization:** Using the method in Example **1,** the structural formula of ZJU-200-Na is determined to be $Zn_3[Fe(CN)_6]_2 \cdot Na_2 \cdot 8H_2O$. The PXRD pattern of ZJU-200-Na is shown in FIG. **24,** with single peaks at $2\theta$ = 16.3° and 19.7°, and double peaks at 13.5-14.2°, 21.5-21.9°, and 24.3-24.7°. Activate ZJU-200-Na by first vacuumizing the sample at room temperature for 12 hours, then vacuumizing at 165 °C for 4 hours to obtain the fully activated material ZJU-200a-Na with the structural formula $Zn_3[Fe(CN)_6]_2 \cdot Na_2$, whose crystal structure is similar to that of ZJU-200a-K.

The 77 K $N_2$ adsorption curve of ZJU-200a-Na is tested, and the result is shown in FIG. **25.** The BET specific surface area calculated therefrom is 31 m$^2$ g$^{-1}$, so the 273 K $CO_2$ adsorption test is adopted to characterize the BET specific surface area of the material (644 m$^2$ g$^{-1}$).

**$CO_2$ Adsorption Capacity and Selectivity:** The single-component adsorption curves of $CO_2$ and $N_2$ by ZJU-200a-Na at 296 K are tested (FIG. **26**). At 296 K and 1 bar, the $CO_2$ adsorption capacity of ZJU-200a-Na is 5.76 mmol g$^{-1}$, and the $N_2$ adsorption capacity is only 0.08 mmol g$^{-1}$, with a molar ratio of $CO_2$ to $N_2$ adsorption capacity of 72. As shown in FIG. **27,** the IAST selectivity of ZJU-200a-Na for $CO_2/N_2$ (15/85, v/v) is calculated according to the 296 K adsorption curve, which is as high as 1211 at 1 bar. Its $CO_2$ adsorption capacity and selectivity break through the trade-off line of existing technologies (see FIG. **1**), confirming the cation gating effect. The adsorption heat of $CO_2$ by the material is calculated according to the adsorption curves at different temperatures (41.4 kJ mol[-1], FIG. **28**).

**Example 3 ZJU-200-Rb**

**Material Preparation:** Adjust the pH of 6 mL of 0.5 M zinc sulfate aqueous solution and 12 mL of 0.5 M sodium ferrocyanide aqueous solution to 4-5 with 2 M acetic acid respectively, stir and react at 100 °C for 72 hours. After the reaction is completed, the powder sample is obtained by suction filtration, washing, and drying. Then soak the powder sample in 6 mL of 0.5 M rubidium chloride solution, place it in an oven at 60 °C for 3 days, and exchange with fresh rubidium chloride solution 3 times during this period. After the ion exchange is completed, the powder sample ZJU-200-Rb is obtained by filtration, washing, and drying.

**Structural Characterization:** Using the method in Example 1, the structural formula of ZJU-200-Rb is determined to be $Zn_3[Fe(CN)_6]_2 \cdot Rb_2 \cdot 8H_2O$. The PXRD test result of ZJU-200-Rb is shown in FIG. **24,** with single peaks at 2θ = 16.3° and 19.7°, and double peaks at 13.5-14.2°, 21.6-21.9°, and 24.3-24.7°. Activate ZJU-200-Rb by first vacuumizing the sample at room temperature for 12 hours, then vacuumizing at 120 °C for 4 hours to obtain the fully activated material ZJU-200a-Rb with the structural formula $Zn_3[Fe(CN)_6]_2 \cdot Rb_2$, whose crystal structure is similar to that of ZJU-200a-K.

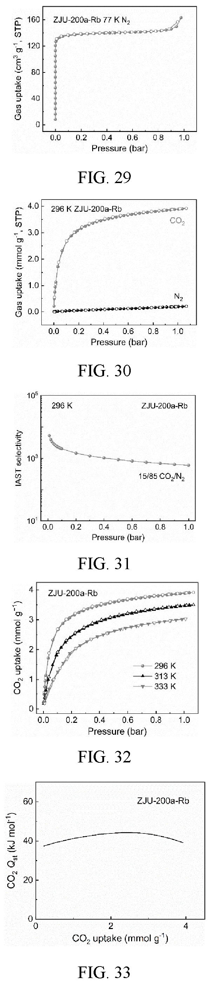

The 77 K $N_2$ adsorption curve of ZJU-200a-Rb is tested, and the result is shown in FIG. **29.** The BET specific surface area calculated therefrom is 566 m[2] g[-1].

**$CO_2$ Adsorption Capacity and Selectivity:** The single-component adsorption curves of $CO_2$ and $N_2$ by ZJU-200a-Rb at 296 K are tested (FIG. **30**). At 296 K and 1 bar, the $CO_2$ adsorption capacity of ZJU-200a-Rb is 3.92 mmol g[-1], and the $N_2$ adsorption capacity is only 0.20 mmol g[-1], with a molar ratio of $CO_2$ to $N_2$ adsorption capacity of 20. As shown in FIG. **31,** the IAST selectivity of ZJU-200a-Rb for $CO_2/N_2$ (15/85, v/v) is calculated according to the 296 K adsorption curve, which is 602 at 1 bar. Its $CO_2$ adsorption capacity and selectivity break through the trade-off line of existing technologies (see FIG. **1**), confirming the cation gating effect. The single-component adsorption curves of $CO_2$ by ZJU-200a-Rb at 296 K, 313 K, and 333 K are tested (FIG. **32**), and the adsorption heat of $CO_2$ by the material is calculated (37.4 kJ mol[-1], FIG. **33**).

**Example 4 ZJU-200-Li**

Prepare 10 mL of 0.1 M $Li_4[Fe(CN)_6]$ solution; mix it with 1 mL of 0.1 M zinc sulfate aqueous solution whose pH is adjusted to 6-7 with acetic acid, stir and react at 50 °C for 72 hours. After the reaction is completed, the intermediate product is obtained by suction filtration, washing, and drying. Then soak the intermediate product in 10 mL of 0.067 M lithium chloride aqueous solution, perform ion exchange at 60 °C for 2 days (3 times in total), then suction filter and wash to obtain the powder product ZJU-200-Li. Using the method in Example **1,** the structural formula of ZJU-200-Li is determined to be $Zn_3[Fe(CN)_6]_2 \cdot Li_2 \cdot 8H_2O$. Activate the material by first vacuumizing the sample at room temperature for 12 hours, then vacuumizing at 105 °C for 4 hours to obtain the fully activated material ZJU-200a-Li with the structural formula $Zn_3[Fe(CN)_6]_2 \cdot Li_2$, whose crystal structure is similar to that of ZJU-200a-K.

**Example 5 ZJU-200-NH$_4$**

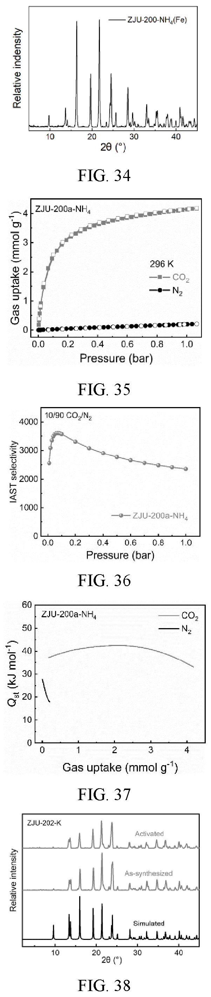

Adjust the pH of 9 mL of 0.05 M zinc sulfate aqueous solution and 6 mL of 0.05 M sodium ferrocyanide aqueous solution to 6-7 with 2 M acetic acid respectively, react at 150 °C for 1 hour. After the reaction is completed, the intermediate product is obtained by suction filtration, washing, and drying. Then soak the powder sample in 9 mL of 0.2 M ammonium chloride solution, place it in an oven at 150 °C for 1 hour, and exchange with fresh ammonium chloride solution once during this period. After the ion exchange is completed, the powder sample ZJU-200-NH$_4$ is obtained by filtration, washing, and drying. Using the method in Example **1,** the structural formula of ZJU-200-NH$_4$ is determined to be $Zn_3[Fe(CN)_6]_2 \cdot (NH_4)_2 \cdot 6H_2O$. The PXRD test result of ZJU-200-NH$_4$ is shown in FIG. **34,** with single peaks at 2θ = 16.2°, 19.7°, and 21.7°, and double peaks at 2θ = 13.6-14.1° and 24.3-24.6°. Activate the material by first vacuumizing the sample at room temperature for 12 hours, then vacuumizing at 120 °C for 4 hours to obtain the fully activated material ZJU-200a-NH$_4$ with the structural formula $Zn_3[Fe(CN)_6]_2 \cdot (NH_4)_2$, whose crystal structure is similar to that of ZJU-200a-K.

The single-component adsorption curves of carbon dioxide and nitrogen by ZJU-200a-NH$_4$ at 296 K are tested, and the results are shown in FIG. **35**. At 296 K and 1 bar, the $CO_2$ adsorption capacity is 4.15 mmol g[-1], and the IAST separation ratio is 2348 (FIG. **36**). As shown in FIG. **37,** the calculated adsorption heat of carbon dioxide is 37.1 kJ mol[-1], and the adsorption heat of nitrogen is 27.6 kJ mol[-1]. The low adsorption heat of carbon dioxide is very conducive to the cyclic regeneration of the material.

**Example 6 ZJU-200-H**

Dissolve 2 mmol of potassium hexacyanoferrate in 10 mL of water, add 1.2 mL of hydrochloric acid, cool to 0 °C, then add 10 mL of diethyl ether to precipitate it. Dissolve the precipitate in 8 mL of methanol, then precipitate with another 10 mL of diethyl ether, and repeat filtration 3 times to obtain $H_4[Fe(CN)_6]$. Adjust the pH of 9 mL of 0.1 M zinc sulfate aqueous solution to 4-5 with 2 M $CH_3COOH$, then drop it into 6 mL of 0.1 M $H_4[Fe(CN)_6]$ aqueous solution at 60 °C, stir continuously for 3 hours. After the reaction is completed, the powder product ZJU-200-H is obtained by filtration, washing, and drying. Using the method in Example **1,** the structural formula of ZJU-200-H is determined to be $Zn_3$ $[Fe(CN)_6]_2 \cdot H_2 \cdot 8H_2O$. Activate the material by first vacuumizing the sample at room temperature for 12 hours, then vacuumizing at 105 °C for 4 hours to obtain the fully activated material ZJU-200a-H with the structural formula $Zn_3$ $[Fe(CN)_6]_2 \cdot H_2$, whose crystal structure is similar to that of ZJU-200a-K.

**Example 7 ZJU-200-Cs**

Adjust the pH of 10 mL of 0.1 M zinc sulfate aqueous solution and 10 mL of 0.1 M sodium ferrocyanide aqueous solution to 6-7 with 2 M $CH_3COOH$ respectively, then mix the two solutions and perform hydrothermal reaction at 70 °C. After the reaction is completed, the powder sample is obtained by suction filtration, washing, and drying. Then soak the powder sample in 10 mL of 0.4 M cesium chloride solution, place it in an oven at 60 °C for 2 days, and exchange with fresh cesium chloride solution 8 times during this period. After the ion exchange is completed, the powder sample ZJU-200-Cs is obtained by filtration, washing, and drying. Using the method in Example 1, the structural formula of ZJU-200-Cs is determined to be $Zn_3[Fe(CN)_6]_2 \cdot Cs_2 \cdot 8H_2O$. Activate the material by first vacuumizing the sample at room temperature for 12 hours, then vacuumizing at 105 °C for 4 hours to obtain the fully activated material ZJU-200a-Cs with the structural formula $Zn_3[Fe(CN)_6]_2 \cdot Cs_2$, whose crystal structure is similar to that of ZJU-200a-K.

**Example 8 ZJU-201-K**

Adjust the pH of 10 mL of 0.1 M zinc sulfate aqueous solution and 10 mL of 0.1 M potassium hexacyanoosmate aqueous solution to 6-7 with 2 M $CH_3COOH$ respectively, then mix the two solutions and perform hydrothermal reaction at 70 °C. After the reaction is completed, the powder sample is obtained by suction filtration, washing, and drying. Then soak the powder sample in 10 mL of 1 M potassium chloride aqueous solution, perform ion exchange at 60 °C. Repeat the ion exchange operation three times within two days. After the ion exchange is completed, the powder sample ZJU-201-K is obtained by filtration, washing, and drying. Using the method in Example **1,** the structural formula of ZJU-201-K is determined to be $Zn_3[Os(CN)_6]_2 \cdot K_2 \cdot 8H_2O$. Activate the material by first vacuumizing the sample at room temperature for 12 hours, then vacuumizing at 105 °C for 4 hours to obtain the fully activated material ZJU-201a-K with the structural formula $Zn_3[Os(CN)_6]_2 \cdot K_2$, whose crystal structure is similar to that of ZJU-200a-K.

**Example 9 ZJU-202-K**

**Material Preparation:** Prepare 9 mL of 0.05 M zinc sulfate aqueous solution and 6 mL of 0.05 M potassium hexacyanoruthenate aqueous solution respectively. Subsequently, mix the above two solutions for hydrothermal reaction, maintain the reaction temperature at 50 °C, and stir continuously for 5 hours. After the reaction is completed, separate the intermediate product by filtration and wash it thoroughly. Then immerse the obtained intermediate product in 9 mL of 2 M potassium chloride aqueous solution, perform ion exchange at 60 °C. Repeat the ion exchange operation three times within two days. Finally, obtain the powdery product ZJU-202-K by filtration and washing.

**Structural Characterization:** Using the method in Example **1,** the structural formula of ZJU-202-K is determined to be $Zn_3[Ru(CN)_6]_2 \cdot K_2 \cdot 8H_2O$. The PXRD test result of unactivated ZJU-202-K is shown in FIG. **38,** with single peaks at $2\theta$ = 16.5°, 19.7°, 21.8°, and 23.9°, and a double peak in the range of 13.5°-14.2°.

To activate ZJU-202-K, vacuumize the sample at room temperature for 12 hours, then continue vacuumizing at 100 °C for 12 hours to obtain the activated material ZJU-202a-K with the structural formula $Zn_3[Ru(CN)_6]_2 \cdot K_2$. The structure of ZJU-202a-K is similar to that of ZJU-200a-K.

The 77 K nitrogen adsorption isotherm of ZJU-202a-K is tested, and the BET specific surface area is calculated to be 654 $m^2 g^{-1}$ according to the test result.

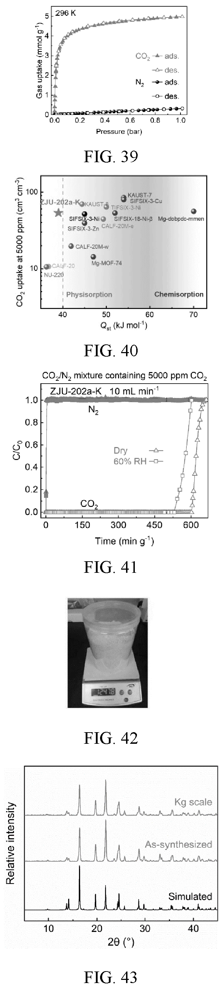

**$CO_2$ Adsorption Capacity and Selectivity:** The single-component adsorption curves of carbon dioxide and nitrogen by ZJU-202a-K at 296 K are tested (FIG. **39**). At 296 K and 1 bar, the $CO_2$ adsorption capacity of ZJU-202a-K is 4.98 mmol $g^{-1}$, while the $N_2$ adsorption capacity is only 0.32 mmol $g^{-1}$. At 296 K and 0.01 bar (i.e., 10,000 ppm), the $CO_2$ adsorption capacity of ZJU-202a-K can reach 2.16 mmol $g^{-1}$; at 0.005 bar (i.e., 5,000 ppm), the $CO_2$ adsorption capacity of the material is still as high as 1.44 mmol $g^{-1}$, which fully demonstrates the excellent $CO_2$ adsorption performance of ZJU-202a-K in low-pressure environments.

It is calculated that at 296 K, the IAST selectivities of ZJU-202a-K for $CO_2/N_2$ mixed gas with concentrations of 5,000 ppm and 10,000 ppm are 2859 and 2771, respectively. In addition, the adsorption heats of ZJU-202a-K for $CO_2$ and $N_2$ are 39.3 $kJ \cdot mol^{-1}$ and 17.7 $kJ \cdot mol^{-1}$, respectively. As shown in FIG. **40,** comparing the $CO_2$ adsorption capacity and corresponding adsorption heat value of the current material at 5,000 ppm, ZJU-202a-K simultaneously achieves high $CO_2$ adsorption capacity and low regeneration energy consumption under low-pressure conditions.

**Breakthrough Experiment and Moisture Resistance:** To simulate the $CO_2$ capture process in confined spaces, a dynamic fixed-bed breakthrough experiment is carried out to evaluate the separation performance of ZJU-202a-K for $CO_2/N_2$ mixed gas with a $CO_2$ content of 5,000 ppm. As shown in FIG. **41,** $CO_2$ begins to break through at 530 min $g^{-1}$, and the corresponding $CO_2$ adsorption capacity is calculated to be 1.4 $mmol \cdot g^{-1}$ (51.8 $cm^3 \, cm^{-3}$), indicating that ZJU-202a-K can efficiently capture $CO_2$ from confined spaces.

The dynamic fixed-bed breakthrough experiment under humid conditions shows that ZJU-202a-K can still efficiently capture $CO_2$ from $CO_2/N_2$ mixed gas with 5,000 ppm $CO_2$ under 40% RH conditions, and the attenuation rate of the corresponding $CO_2$ adsorption capacity is less than 15%.

Similarly, through structural characterization and performance testing, ZJU-200a-Na, ZJU-200a-Rb, ZJU-200a-Li, ZJU-200a-$NH_4$, ZJU-200a-H, ZJU-200a-Cs, ZJU-201a-K, and ZJU-202a-K in Examples **2-9** all have the crystal structure described in the present invention. They all show excellent $CO_2$ adsorption capacity and selectivity, as well as excellent moisture resistance when used for gas adsorption testing.

## Example 10 Regulation of M in $M_x[M'(CN)_6]_y \cdot A_z \cdot nH_2O$

Referring to the synthesis method in Example **1,** the only difference is that the zinc sulfate aqueous solution is replaced with zinc ferrous sulfate aqueous solution, cobalt sulfate aqueous solution, copper sulfate aqueous solution, nickel sulfate aqueous solution, and cadmium sulfate aqueous solution respectively. Test the SCXRD and PXRD data of the fully activated samples using the method in Example **1,** and determine that the structural formulas of these activated materials are $Fe_3[Fe(CN)_6]_2 \cdot K_2$, $Co_3[Fe(CN)_6]_2 \cdot K_2$, $Cu_3[Fe(CN)_6]_2 \cdot K_2$, $Ni_3[Fe(CN)_6]_2 \cdot K_2$, and $Cd_3[Fe(CN)_6]_2 \cdot K_2$ respectively, whose crystal structures are similar to that of ZJU-200a-K. Similarly, test the $CO_2$ adsorption isotherms and mixed gas breakthrough curves of the above materials using the method in Example **1.** The results show that these materials all exhibit excellent $CO_2$ adsorption capacity and selectivity, as well as excellent moisture resistance.

It can be seen from Examples **1-10** that the metal ions M selected in the present invention are all tetracoordinate metal ions, whose coordination ability and coordination configuration are highly similar, and similar framework structures can be formed after coordination with hexacyanometal ions $M'(CN)_6$. The cations A selected in the present invention are all monovalent cations, and all can be distributed in the cage in a free state. Therefore, with the synergistic effect of the structural characteristics of tetracoordinate metal ions M, hexacyanometal ions $M'(CN)_6$, and monovalent cations A, the material $M_x[M'(CN)_6]_y \cdot A_z \cdot nH_2O$ of the present invention has specific crystal structure parameters and dodecahedron-like cage structure. Even if the types of M, M', and A are adjusted within the scope defined by the present invention, the structural parameters of $M_x[M'(CN)_6]_y \cdot A_z \cdot nH_2O$ will not change significantly beyond the scope defined by the present invention. For example, M is one or a combination selected from the group consisting of $Zn^{2+}$, $Fe^{2+}$, $Co^{2+}$, $Cu^{2+}$, $Ni^{2+}$, and $Cd^{2+}$; $[M'(CN)_6]$ is one or a combination selected from the group consisting of $[Fe(CN)_6]^{4-}$, $[Ru(CN)_6]^{4-}$, and $[Os(CN)_6]^{4-}$; A is one or a combination selected from the group consisting of $H^+$, $NH_4^+$, $Li^+$, $Na^+$, $K^+$, $Rb^+$, $Cs^+$, and $Fr^+$; the resulting $M_x[M'(CN)_6]_y \cdot A_z \cdot nH_2O$ all have the crystal structure parameters and dodecahedron-like cage structure described in the present invention. Further, the specific crystal structure parameters and dodecahedron-like cage structure of these materials can realize the cation gating effect, thereby showing the excellent $CO_2$ adsorption capacity, selectivity, and moisture resistance described in the present invention.

In summary, the framework materials within the scope of the present invention can all solve the problems that high carbon dioxide selectivity and high carbon dioxide adsorption capacity cannot be simultaneously achieved in low-pressure and high-humidity environments, and the framework materials have poor moisture resistance. Their comprehensive performance is significantly better than currently reported adsorbent materials.

## Example 11 Industrial Scale-Up Test

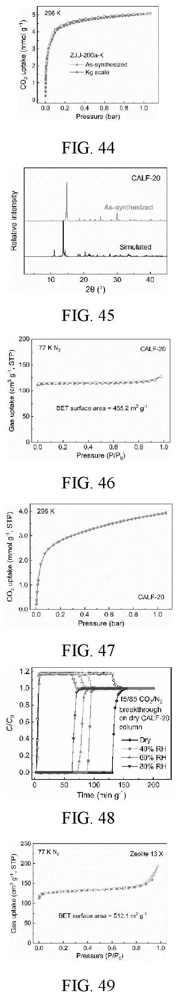

Taking the sample of Example **1** as an example, the kilogram-scale preparation of ZJU-200-K is carried out. Strictly referring to the raw materials and process parameters of Example **1,** a specific large-scale reaction device is adopted to scale up the dosage of each reactant by a 1500-fold proportion. The sample is activated according to the method of Example **1,** and various parameters are tested according to the test methods of Example **1.** The successful synthesis of kilogram-scale ZJU-200-K powder sample is achieved (FIG. **42**). The position and intensity of the diffraction peaks in the PXRD pattern show almost no change (FIG. **43**), and the change in $CO_2$ adsorption capacity is less than 1% (FIG. **44**). This proves that the kilogram-scale sample still maintains the original crystal structure and adsorption performance, indicating that the material and preparation method of the present invention have potential for industrial application.

**Comparative Example 1 CALF-20**

The MOF material CALF-20 with the best comprehensive performance for $CO_2$ capture was selected for comparison (J.-B. Lin, et al. Science 374, 1464-1469 (2021)). Referring to the literature method, 6.60 g of zinc oxalate, 5.00 g of 1,2,4-triazole and 66.0 mL of methanol were added to a 100 mL autoclave. The resulting reaction solution was stirred for ten minutes and then stored in a high-temperature oven at 180 °C for 48 hours. The obtained precipitate was separated by filtration, washed with methanol multiple times, and dried to obtain CALF-20. The PXRD pattern, 77 K $N_2$ adsorption curve and 296 K $CO_2$ adsorption curve of CALF-20 are shown in FIG. **45-47,** which are consistent with the literature reports, confirming the successful synthesis of the material. Its $CO_2$ adsorption capacity at 296 K and 0.15 bar is only 2.7 mmol $g^{-1}$, and the reported $CO_2/N_2$ IAST selectivity is 230, both of which are lower than those of the material in Example **1** of the present invention.

Dynamic breakthrough experiments were used to evaluate the separation effect of CALF-20 on 15/85 $CO_2/N_2$ mixed gas under dry and humid conditions. As shown in FIG. **48,** the $CO_2$ capture capacity of CALF-20 under dry conditions is 2.6 mmol $g^{-1}$, and it can maintain 68% ($CO_2$ adsorption capacity of 1.77 mmol $g^{-1}$) under 40% RH conditions. The moisture resistance is significantly weaker than that of the material in Example **1** of the present invention.

**Comparative Example 2 Zeolite 13X**

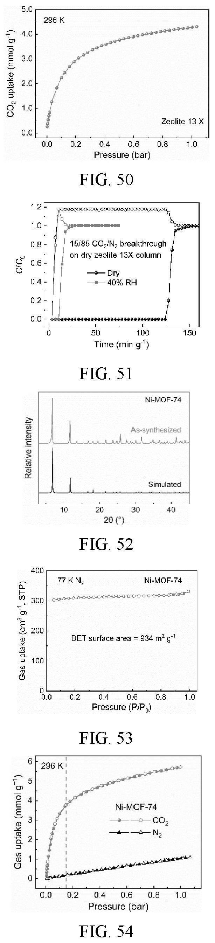

The commercial $CO_2$ adsorbent Zeolite 13X was selected for comparison. The 77 K $N_2$ adsorption curve and 296 K $CO_2$ adsorption curve of Zeolite 13X are shown in FIG **49** and **50.** The $CO_2$ adsorption capacity of Zeolite 13X at 296 K and 0.15 bar is only 2.7 mmol $g^{-1}$, and the 15/85 $CO_2/N_2$ IAST selectivity is 146, both of which are lower than those of the material in Example 1 of the present invention.

Dynamic breakthrough experiments were used to evaluate the separation effect of Zeolite 13X on 15/85 $CO_2/N_2$ mixed gas under dry and humid conditions. As shown in FIG. **51,** the $CO_2$ capture capacity of Zeolite 13X under dry conditions is 2.5 mmol $g^{-1}$, and the $CO_2$ capacity decays by more than 90% under 40% RH humid conditions. The moisture resistance is extremely poor, which is significantly weaker than that of the material in Example 1 of the present invention.

**Comparative Example 3 Ni-MOF-74**

The classic $CO_2$ capture MOF material Ni-MOF-74 was selected for comparison (S. R. Caskey, et al. J. Am. Chem. Soc. 2008, 130, 10870-10871). Referring to the literature method, 142.5 mg of nickel nitrate and 33.6 mg of 2,5-dihydroxyterephthalic acid ($H_4$dobdc) were dissolved in a 15:1:1 (v/v/v) mixture of DMF-ethanol-water (15 mL). The mixture was ultrasonicated for 30 minutes and then transferred to a 20 mL reaction kettle. After reacting at 398 K for 26 hours, the product was obtained by suction filtration, washing and drying.

The PXRD pattern, 77 K $N_2$ adsorption curve and 296 K $CO_2$ adsorption curve of Ni-MOF-74 are shown in FIG. **52-54,** which are consistent with the literature reports, confirming the successful synthesis of the material. Its $CO_2$ adsorption capacity at 296 K and 0.15 bar is 3.71 mmol $g^{-1}$, and the 15/85 $CO_2/N_2$ IAST selectivity is only 44, both of which are lower than those of the material in Example **1** of the present invention.

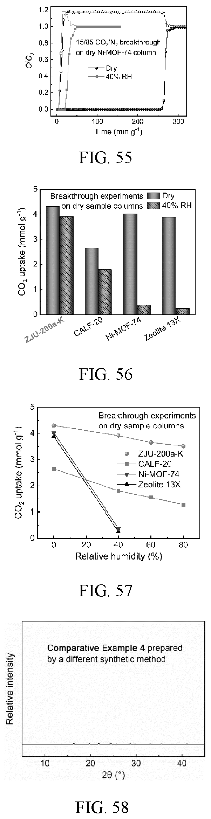

Dynamic breakthrough experiments were used to evaluate the separation effect of Ni-MOF-74 on 15/85 $CO_2/N_2$ mixed gas under dry and humid conditions. As shown in FIG. **55,** the $CO_2$ capture capacity of Ni-MOF-74 under 40% RH humid conditions decays by more than 90% compared with dry conditions, which is significantly weaker than that of the material in Example **1** of the present invention.

The comparison results of the $CO_2$ adsorption capacity of the materials in Example **1** and Comparative Examples **1-3** under dry and different humidity conditions at 0.15 bar are shown in FIG. **56** and **57.** The comparison results show that the $CO_2$ adsorption capacity of the material in Example **1** under both dry and humid environments is significantly higher than that of the comparative materials, fully proving that the material of the present invention has extremely high $CO_2$ adsorption capacity, especially for $CO_2$ capture under low pressure ($\leq 0.15$ bar) and high humidity ($\geq 40\%$ RH) conditions.

**Comparative Example 4**

Referring to the preparation method and detection method of Example **1,** the only difference is that the step of adjusting the pH value is changed to adding an excessive amount of hydrochloric acid solution to adjust the pH < 1. The PXRD pattern of the material is shown in FIG. **58,** which proves that the material cannot be synthesized in a strong acidic environment. At 296 K, the $CO_2$ adsorption capacity of the material is 0.5 mmol $g^{-1}$, and the $N_2$ adsorption capacity is 0.3 mmol $g^{-1}$, which cannot achieve high-selectivity adsorption of $CO_2$.

**Comparative Example 5**

Referring to the preparation method and detection method of Example **1,** the only difference is that the step of adjusting the pH value is changed to adding NaOH to adjust the pH > 8. The crystallinity of the product becomes poor, and the $CO_2$ adsorption performance decreases. The adsorption capacity at 296 K and 1 bar is < 4.5 mmol g$^{-1}$. Compared with the material in Example **1,** the attenuation of $CO_2$ adsorption capacity exceeds 10%.

**Comparative Example 6**

Referring to the preparation method and detection method of Example **1,** the only difference is that the molar concentrations of the zinc sulfate aqueous solution and the potassium ferrocyanide aqueous solution are changed to 2 M. As a result, a large amount of precipitate is formed immediately when the two reaction solutions are in contact, and the reaction yield is low. On the other hand, the grains agglomerate with each other before they can grow, the grain size is small (< 100 nm), the crystallinity of the product becomes poor, the diffraction peaks of the PXRD pattern are broadened, and the double peaks at 2θ = 13±2° and 24±2° are all broadened into hump peaks.

**Comparative Example 7**

Referring to the preparation method and detection method of Example **1,** the only difference is that the concentration of the potassium chloride solution used for ion exchange is changed to 0.015 M. As a result, the ion exchange is not sufficient, and the measured molar fraction of A is less than 3%. The BET specific surface area tested according to the 77 K $N_2$ adsorption curve is less than 500 m$^2$ g$^{-1}$. Compared with the material in Example **1,** the attenuation of the specific surface area exceeds 20%.

In summary, the data from the above examples and comparative examples show that compared with the existing CALF-20, Zeolite 13X and Ni-MOF-74 materials, the framework material of the present invention exhibits better $CO_2$ adsorption performance, especially for $CO_2$ capture in humid environments, and has excellent moisture resistance. Comparative Examples **4-7** prove that the characteristic parameters of the preparation method of the present application have a synergistic effect, and the prepared framework material with a unique structure contains free monovalent cations inside, has a unique crystal structure and unit cell parameters, and has outstanding performance in $CO_2$ adsorption under low pressure (≤ 0.15 bar) and high humidity environment (≥ 40% RH).

The above examples are only used to illustrate the present invention and are not intended to limit the scope of the present invention. In addition, it should be understood that after reading the content taught by the present invention, those skilled in the art can make various changes or modifications to the present invention, and these equivalent forms also fall within the scope defined by the appended claims of the present application.

**Claims**

1. A metal cyanide-based framework material, **characterized in that** the general structural formula of the framework material is $M_x[M'(CN)_6]_y \cdot A_z \cdot nH_2O$, where M is a tetracoordinate metal ion, $1 \le x \le 8$; $[M'(CN)_6]$ is a hexacyanide ion, $1 \le y \le 6$; A is a monovalent cation, $1 \le z \le 6$; and 2x - 4y + z = 0 is satisfied; n represents the water content of the material, and $0 \le n \le 10$; the framework material has a crystal structure; when $1 \le n \le 10$, the XRD pattern of the crystal structure has single peaks at 2θ = 16±2° and 20±2°, and single or double peaks at 2θ = 13±2°, 22±2°, and 24±2°, the crystal structure belongs to the $R\bar{3}c$ space group (space group No. 167) in the trigonal crystal system, with unit cell parameters a = b = 11-14 Å and c = 30-34 Å; when $0 \le n < 1$, the XRD pattern of the crystal structure has single peaks at 2θ = 10±2° and 16.5±2°, and single or double peaks at 2θ = 14.5±2° and 20.2±2°, the space group of the crystal structure transforms from the $R\bar{3}c$ space group (space group No. 167) to the $P2/c$ space group (space group No. 13), with unit cell parameters a = 15-20 Å, b = 10-14 Å, and c = 10-14 Å; preferably, the tetracoordinate metal ion M is one or a combination selected from the group consisting of $Zn^{2+}$, $Fe^{2+}$, $Co^{2+}$, $Cu^{2+}$, $Ni^{2+}$ and $Cd^{2+}$; preferably, the hexacyanide ion $[M'(CN)_6]$ is one or a combination selected from the group consisting of $[Fe(CN)_6]^{4-}$, $[Ru(CN)_6]^{4-}$, and $[Os(CN)_6]^{4-}$; preferably, the monovalent cation A is one or a combination selected from the group consisting of $H^+$, $NH_4^+$, $Li^+$, $Na^+$, $K^+$, $Rb^+$, $Cs^+$, $Fr^+$; preferably, the framework material comprises elements M, M', C, N, A, H, and O, where the molar fraction of M is 5%-15%, the molar fraction of M' is 3%-10%, the molar fraction of C is 30%-45%, the molar fraction of N is 30%-45%, the molar fraction of A is 3%-10%, the molar fraction of H is 0%-40%, and the molar fraction of O is 0%-20%; preferably, the BET specific surface area of the framework material is 200-1000 m$^2$ g$^{-1}$.

2. The metal cyanide-based framework material of claim 1, **characterized in that** the framework material includes but is

not limited to $Zn_x[M'(CN)_6]_y \cdot (NH_4)_z \cdot nH_2O$, $Zn_x[M'(CN)_6]_y \cdot Na_z \cdot nH_2O$, $Zn_x[M'(CN)_6]_y \cdot K_z \cdot nH_2O$, $Zn_x[M'(CN)_6]_y \cdot Rb_z \cdot n$-$H_2O$, where $[M'(CN)_6]$ is one or a combination selected from the group consisting of $[Fe(CN)_6]^{4-}$, $[Ru(CN)_6]^{4-}$, and $[Os(CN)_6]^{4-}$, $2.5 \leq x \leq 3.5$, $1.5 \leq y \leq 2.5$, $1.5 \leq z \leq 2.5$, and $2x - 4y + z = 0$ is satisfied; preferably, the framework material is $Zn_3[Fe(CN)_6]_2 \cdot A_2$, where A is one or a combination selected from the group consisting of $H^+$, $NH_4^+$, $Li^+$, $Na^+$, $K^+$, $Rb^+$, and $Cs^+$; more preferably, the framework material is $Zn_3[Fe(CN)_6]_2 \cdot K_2$.

3. The metal cyanide-based framework material of claim 1, **characterized in that** the crystal structure of the framework material is a dodecahedron-like cage structure, each cage has twelve windows, the monovalent cation A is in a free state in the cage, and the dodecahedron-like cage structure is verified by reduction, fitting, or refinement based on XRD test data;

   preferably, the twelve windows include six hexagonal windows and six quadrilateral windows, the diameter of the hexagonal windows is 3-4 Å, and the diameter of the quadrilateral windows is 2-3 Å;
   preferably, when the water content of the material is $0 \leq n < 1$, the metal cyanide-based framework material has a cation gating effect; the cation gating effect is manifested in selectively allowing $CO_2$ molecules to pass through the windows, while not allowing other molecules such as $N_2$ and $CH_4$ to pass through the windows, thereby achieving extremely high $CO_2$ adsorption capacity and selectivity; further, the cation gating effect means that under the same temperature and pressure conditions, the molar ratio of the $CO_2$ adsorption capacity to the $N_2$ adsorption capacity of the framework material is greater than 10, and the $CO_2$ adsorption capacity is greater than 3 mmol $g^{-1}$; further, the temperature is 273-333 K; further, the pressure is 0.15-1 bar; further, when the temperature is 273-333 K and the pressure is 0.15-1 bar, the $N_2$ adsorption capacity of the framework material is less than 0.3 mmol $g^{-1}$; further, when the temperature and pressure are 296 K and 1 bar, the molar ratio of the $CO_2$ adsorption capacity to the $N_2$ adsorption capacity of the framework material reaches more than 20, and the $CO_2$ adsorption capacity is greater than 4 mmol $g^{-1}$;
   preferably, at a $CO_2$ pressure of 0.15 bar, a relative humidity of 40-80% RH and a temperature of 296 K, the metal cyanide-based framework material can achieve a $CO_2$ adsorption capacity of at least 3.5 mmolg$^{-1}$ (140 cm$^3$ cm$^{-3}$).

4. The metal cyanide-based framework material of claim **1, characterized in that** when $0 \leq n < 1$, at a temperature of 296-313 K and a pressure of 1 bar, calculated according to the Ideal Adsorption Solution Theory (IAST), the IAST selectivity ($S_{ads}$) of the framework material for $CO_2/N_2$ with a volume ratio (v/v) of 15/85 is $\geq 500$.

   Preferably, when the framework material is $Zn_3[Fe(CN)_6]_2 \cdot K_2$, the $CO_2$ adsorption capacity at 296 K and 1 bar is $\geq$ 4.5 mmol $g^{-1}$, the $N_2$ adsorption capacity is $\leq 0.2$ mmol $g^{-1}$, and the separation selectivity ($S_{ads}$) for $CO_2/N_2$ with a volume ratio of 15/85 is $\geq 10,000$;
   preferably, at a $CO_2$ pressure of 0.15 bar, a relative humidity of 40-80% RH and a temperature of 296 K, the metal cyanide-based framework material can achieve a $CO_2$ adsorption capacity of at least 3.5 mmol $g^{-1}$ (140 cm$^3$ cm$^{-3}$), and has an IAST adsorption selectivity ($S_{ads}$) of $\geq 500$ for $CO_2/N_2$ (15/85, v/v).

5. A preparation method of a metal cyanide-based framework material, **characterized in that** the method comprises the following steps:

   (1) first, adjusting the pH values of the solution containing the tetracoordinate metal ion M and the solution containing the hexacyanide ion $[M'(CN)_6]$ to pH = 4-7 respectively, then mixing the two solutions and stir for reaction; the molar concentrations of the M solution and the $[M'(CN)_6]$ solution are both $\leq 1$ mol L$^{-1}$; after the reaction is completed, the framework material intermediate is obtained;
   (2) soaking the framework material intermediate in an aqueous solution or organic solution containing the monovalent cation A for ion exchange; the concentration of A ions in the solution is $\geq 0.05$ mol L$^{-1}$; repeating the exchange step multiple times until the molar fraction of the monovalent cation A in the framework material is 3%-10%, and the framework material with a water content of $1 \leq n \leq 10$ is obtained;
   preferably, the tetracoordinate metal ion M is one or a combination selected from the group consisting of $Zn^{2+}$, $Fe^{2+}$, $Co^{2+}$, $Cu^{2+}$, $Ni^{2+}$, and $Cd^{2+}$; more preferably, the source of the tetracoordinate metal ion M is one or a combination selected from the group consisting of zinc sulfate, zinc chloride, zinc nitrate, zinc acetate, ferrous chloride and nickel chloride;
   preferably, the hexacyanide ion $[M'(CN)_6]$ is one or a combination selected from the group consisting of $[Fe(CN)_6]^{4-}$, $[Ru(CN)_6]^{4-}$, and $[Os(CN)_6]^{4-}$; more preferably, the source of the hexacyanide ion $[M'(CN)_6]$ is one or a combination selected from the group consisting of $K_4[Fe(CN)_6]$, $Na_4[Fe(CN)_6]$, $Li_4[Fe(CN)_6]$, $H_4[Fe(CN)_6]$, $Rb_4[Fe(CN)_6]$ and $(NH_4)_4[Fe(CN)_6]$;
   preferably, in step (1), the solvent of the solution is one or a combination selected from the group consisting of water, alcohols and DMF; more preferably, the solvent is water;

preferably, in step (1), the pH value is adjusted with an acidic regulator, which is one or a combination selected from the group consisting of hydrochloric acid, acetic acid, sulfuric acid and nitric acid;

preferably, in step (1), the molar concentrations of the M solution and the $[M'(CN)_6]$ solution are 0.05-0.5 mol $L^{-1}$;

preferably, in step (1), the molar ratio of M to $[M'(CN)_6]$ is 1 : 0.1-2;

preferably, in step (1), the reaction is carried out at room temperature or under heating; preferably, the heating temperature is $\leq 200$ °C; more preferably, the heating temperature is 50-150 °C and the heating time is 1-72 h; further preferably, the heating temperature is 60-100 °C and the heating time is 3-24 h;

preferably, in step (2), the molar ratio of the monovalent cation A to the tetracoordinate metal ion M is $\geq 0.67$; more preferably, the molar ratio is 0.67-4;

preferably, in step (2), the concentration of A ions in the solution is 2 mol $L^{-1}$;

preferably, in step (2), the monovalent cation A is one or a combination selected from the group consisting of $H^+$, $NH_4^+$, $Li^+$, $Na^+$, $K^+$, $Rb^+$, $Cs^+$, $Fr^+$; more preferably, the aqueous or organic solution containing the monovalent cation A is selected from the group consisting of aqueous solutions, alcohol solutions, and DMF solutions of LiCl, NaCl, KCl, RbCl, CsCl, FrCl, HCl, and $NH_4Cl$;

preferably, in step (2), the ion exchange temperature is 25-150 °C, preferably 25-60 °C; the exchange time is 1-72 h; the number of exchanges is 1-8 times, preferably 1-3 times.

6. The preparation method of claim **13, characterized in that** after step (2), an activation step is further included to make the water content $0 \leq n < 1$;

preferably, the activation step includes one or a combination of decompression, heating, or gas purging;

preferably, the reduced pressure treatment is to place the material obtained in step (2) in an environment with a vacuum degree of 0.1-100 Pa; more preferably, the vacuum degree is 0.1-10 Pa;

preferably, the heating treatment is to maintain the temperature of the environment where the material obtained in step (2) is located at 50-300 °C; more preferably, the temperature is 150 °C;

preferably, the gas purging treatment uses one or a combination selected from the group consisting of nitrogen, argon, helium, air and steam; more preferably, the purge gas is nitrogen;

preferably, the activation time is 3-48 h.

7. A physical adsorbent for $CO_2$ capture, comprising the framework material according to any one of claims **1** to **4** or the framework material prepared by the preparation method according to any one of claims **5** to **6.**

8. A method for adsorbing $CO_2$, **characterized in that** the physical adsorbent according to claim 7 is brought into contact with $CO_2$-containing gas.

9. A $CO_2$ adsorption device, **characterized in that** the device comprises the physical adsorbent according to claim **7,** or adopts the $CO_2$ adsorption method according to claim **8;** preferably, the adsorption device includes, but is not limited to, an adsorption bed, an adsorption pipeline and an adsorption bin.

10. An application of the physical adsorbent in $CO_2$ adsorption, **characterized in that** the physical adsorbent according to claim **7,** the adsorption method according to claim **8** or the adsorption device according to claim **9** is used for $CO_2$ adsorption; preferably, the application of $CO_2$ adsorption includes, but is not limited to, flue gas $CO_2$ capture, biogas $CO_2$ capture and closed space $CO_2$ capture.

FIG. 1

FIG. 2

FIG. 3

FIG. 4

FIG. 5

3CO$_2$+2H$_2$O@ZJU-200a-K

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

EP 4 772 474 A1

FIG. 24

FIG. 25

FIG. 26

FIG. 27

FIG. 28

26

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

FIG. 48

FIG. 49

FIG. 50

FIG. 51

FIG. 52

FIG. 53

FIG. 54

FIG. 55

FIG. 56

FIG. 57

FIG. 58

### INTERNATIONAL SEARCH REPORT

| | |
|---|---|
| International application No. | |
| | **PCT/CN2025/114612** |

**A. CLASSIFICATION OF SUBJECT MATTER**

C01C3/12(2006.01)i

According to International Patent Classification (IPC) or to both national classification and IPC

**B. FIELDS SEARCHED**

Minimum documentation searched (classification system followed by classification symbols)

IPC: C01C

Documentation searched other than minimum documentation to the extent that such documents are included in the fields searched

Electronic data base consulted during the international search (name of data base and, where practicable, search terms used)

CNTXT, CNKI, WPABS, VEN, WOTXT, EPTXT, USTXT, ISI_WEB OF SCIENCE: 浙江大学, 李斌, 钱国栋, ZJU, 框架, 骨架, 金属有机, MOF, MCF, 氰基, 氰化, +CN?6+, 一价阳离子, H, NH4, Li, Na, K, Rb, Cs, Fr, 活化, 空间群, metal-organic, framework, +cyano, +cyanide, monovalent cation, hydrogen, ammonium, lithium, sodium, potassium, rubidium, cesium, francium, activation, space group

**C. DOCUMENTS CONSIDERED TO BE RELEVANT**

| Category* | Citation of document, with indication, where appropriate, of the relevant passages | Relevant to claim No. |
|---|---|---|
| A | CN 113117648 A (ZHEJIANG UNIVERSITY) 16 July 2021 (2021-07-16) description, paragraphs [0006]-[0032] | 1-10 |
| A | CN 116139648 A (ZHEJIANG UNIVERSITY) 23 May 2023 (2023-05-23) claims 1-8 | 1-10 |
| A | CN 107417710 A (ZHEJIANG UNIVERSITY) 01 December 2017 (2017-12-01) claims 1-8 | 1-10 |
| A | US 2022056064 A1 (MASSEY UNIVERSITY) 24 February 2022 (2022-02-24) claims 1-26 | 1-10 |
| A | GU, Xiaowen et al. "Programmed Fluorine Binding Engineering in Anion-Pillared Metal-Organic Framework for Record Trace Acetylene Capture from Ethylene" *Science Advances*, Vol. 9, No. 31, 04 August 2023 (2023-08-04), 1-10 ISSN: 2375-2548, text, page 2, left-hand column | 1-10 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 November 2025** | **20 November 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/114612**

| Patent document cited in search report | | | Publication date (day/month/year) | Patent family member(s) | | | Publication date (day/month/year) |
|---|---|---|---|---|---|---|---|
| CN | 113117648 | A | 16 July 2021 | CN | 113117648 | B | 03 June 2022 |
| CN | 116139648 | A | 23 May 2023 | | None | | |
| CN | 107417710 | A | 01 December 2017 | CN | 107417710 | B | 23 April 2019 |
| US | 2022056064 | A1 | 24 February 2022 | JP | 2022514049 | A | 09 February 2022 |
| | | | | JP | 7476203 | B2 | 30 April 2024 |
| | | | | US | 11905303 | B2 | 20 February 2024 |
| | | | | WO | 2020130856 | A1 | 25 June 2020 |
| | | | | AU | 2019403729 | A1 | 17 June 2021 |
| | | | | AU | 2019403729 | B2 | 13 February 2025 |
| | | | | CA | 3123380 | A1 | 25 June 2020 |
| | | | | ES | 2992721 | T3 | 17 December 2024 |
| | | | | EP | 3897921 | A1 | 27 October 2021 |
| | | | | EP | 3897921 | A4 | 21 September 2022 |
| | | | | EP | 3897921 | C0 | 01 May 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2904546 A1

**Non-patent literature cited in the description**

- **KOLLE, J. M.** ; **FAYAZ, M.** ; **SAYARI, A.** *Chem. Rev.*, 2021, vol. 121, 7280-7345
- **R. ZEVENHOVEN et al.** Control of Pollutants in Flue Gases and Fuel Gases. Helsinki University of Technology, 2021
- **A. RAJENDRAN et al.** *Adv. Mater*, 2023, 2301730
- **M. J. LASHAKI et al.** *Chem. Soc. Rev.*, 2019, vol. 48, 3320-3405
- **R. L. SIEGELMAN et al.** *Nat. Mater.*, 2021, vol. 20, 1060-1072
- **J. MEREL et al.** *Chem. Res.*, 2008, vol. 47, 209-215
- **S. R. CASKEY et al.** *J. Am. Chem. Soc.*, 2008, vol. 130, 10870-10871
- **S. XIANG et al.** *Nat. Commun*, 2012, vol. 3, 954
- **P. NUGENT et al.** *Nature*, 2013, vol. 495, 80-84
- **H. A. EVANS et al.** *Sci. Adv.*, 2022, vol. 8, 1473
- **Z. ZHANG et al.** *Energy Environ. Sci.*, 2014, vol. 7, 2868-2899
- **A. RAJENDRAN et al.** *Adv. Mater*, 2023, vol. 35, 2301730
- **D. CHAKRABORTY et al.** *Adv. Funct. Mater.*, 2023, vol. 33, 2309089
- **J.-B. LIN et al.** *Science*, 2021, vol. 374, 1464-1469
- **MYERS, A. L. et al.** *AIChE J.*, 1965, vol. 11, 121-127
- **ZHOU, Y. et al.** *Science*, 2021, vol. 373, 315-320
- **HU, Y. et al.** *Adv. Funct. Mater*, 2023, vol. 33, 2213915